(19) **Europäisches Patentamt / European Patent Office / Office européen des brevets**

(11) **EP 2 390 047 B1**

(12) **EUROPEAN PATENT SPECIFICATION**

(45) Date of publication and mention
of the grant of the patent:
**02.10.2013 Bulletin 2013/40**

(21) Application number: **10731344.7**

(22) Date of filing: **14.01.2010**

(51) Int Cl.:
**B23K 31/00** (2006.01)　　**B23K 9/23** (2006.01)
**B23K 103/04** (2006.01)　　**B23K 9/02** (2006.01)
**B23P 6/04** (2006.01)

(86) International application number:
**PCT/JP2010/050653**

(87) International publication number:
**WO 2010/082675 (22.07.2010 Gazette 2010/29)**

(54) **WELD STRUCTURE HAVING BRITTLE FRACTURE ARRESTING CHARACTERISTICS**

SCHWEISSSTRUKTUR MIT SPRÖDHEITSBRUCHHEMMEIGENSCHAFTEN

STRUCTURE DE SOUDAGE PRESENTANT DES CARACTERISTIQUES D'ARRET DE RUPTURE FRAGILE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.01.2009 JP 2009006036**
**16.12.2009 JP 2009285504**

(43) Date of publication of application:
**30.11.2011 Bulletin 2011/48**

(73) Proprietor: **Nippon Steel & Sumitomo Metal Corporation**
**Tokyo 100-8071 (JP)**

(72) Inventors:
• **HASHIBA, Yuuji**
**Tokyo 100-8071 (JP)**

• **ISHIKAWA, Tadashi**
**Tokyo 100-8071 (JP)**
• **INOUE, Takehiro**
**Tokyo 100-8071 (JP)**
• **OTANI, Jun**
**Tokyo 100-8071 (JP)**
• **ITOH, Akira**
**Tokyo 100-8071 (JP)**

(74) Representative: **Vossius & Partner**
**Siebertstrasse 4**
**81675 München (DE)**

(56) References cited:
EP-A1- 1 674 187　　　JP-A- 51 062 155
JP-A- 2005 131 708　　JP-A- 2005 319 516
JP-A- 2007 302 993　　JP-A- 2008 248 382

**Description**

The present invention relates to a welded structure having excellent brittle crack propagation resistance which controls and suppresses propagation of a brittle crack when a brittle crack occurs in a welded joint.
In particular, it relates to a welded structure having excellent brittle crack propagation resistance which can control and suppress propagation of a brittle crack and improve safety even when a brittle crack occurs in a welded joint of a welded structure formed by welding thick-gauge steel plates.

Background Art

In recent years, in welded structures for use in large container ships, bulk carriers, and other ships and in welded structures such as building structures and steel structures for civil engineering, a high safety has come to be demanded against fracture due to brittle cracks etc. In particular, container ships are becoming remarkably larger in size. For example, 6000 TEU and larger giant container ships are now being produced. The steel plates used for the sheer strakes or outer hull plating are being made thicker and higher in strength. Steel plates of a plate thickness of 70 mm or more and a yield strength of the 390N/mm$^2$ class or more are becoming used.
Here, "TEU (Twenty feet Equivalent Unit)" expresses size converted to 20 foot length containers and is a parameter indicating the carrying capacity of a container ship. Container ships are structured to be improved in carrying capacity and handling efficiency by eliminating the bulk heads, etc. and enlarging the area of hatches. In particular, it is therefore necessary to secure sufficient strength of outer and inner hull plating. Therefore, the above such high strength steel plates are being used.
When constructing an above such welded structure, to reduce the construction costs and improve the construction efficiency, large heat input welding (for example, electro gas arc welding) is being broadly used. In particular, the greater the plate thickness of the steel plate, the more the welding work hours increase, so it is being demanded to perform welding by large heat input as much as possible. However, when applying large heat input welding to the welding of steel plates, the weld heat affected zone (HAZ) falls in toughness and the HAZ increases in width, so the value of the fracture toughness against brittle fracture tends to fall.
For this reason, to suppress the initiation of brittle cracks in welded joints and achieve arrest of brittle cracks, TMCP (thermo mechanical control process) steel plate having excellent brittle crack resistance characteristics has been proposed. By using this TMCP steel plate, the value of the resistance to the initiation of brittle fracture, that is, the value of fracture toughness, is improved, so in a normal usage environment, the possibility of a structure experiencing brittle fracture becomes extremely low. However, at the time of an earthquake or an accident involving the collision of structures or a fire etc., in the unlikely event of brittle fracture occurring, such a brittle crack will continue propagating through the HAZ and is liable to cause a major fracture in the welded structure.
For example, in a welded structure such as a container ship, TMCP steel plate of a plate thickness of about 50 mm etc. is being used. Even in the unlikely event of a brittle crack occurring in a welded joint, the weld residual stress will result in the brittle crack being diverted from the weld zone to the base metal side, so it had been believed that if securing the arrest performance of the base metal, the brittle crack could be arrested at the base metal. Further, in over 6000 TEU large-sized container ships and other further larger size welded structures, steel plate of larger plate thickness has become necessary. Furthermore, to streamline the structure, increasing the thickness of the steel plate is effective, so it had been demanded to use thick-gauge steel plate of high strength steel with a high design stress. However, when using such thick-gauge steel plate, depending on the degree of fracture toughness of the HAZ, a brittle crack is liable to continue to be propagated along the HAZ without being diverted to the base metal and to cause large fracture in the welded structure. 0006 To solve this problem, a welded structure where part of a butt welded joint is repair welded (gouged and back filled) to divert a brittle crack which propagates along the HAZ to the base metal side has been proposed (for example, PLT 1). However, the welded structure of PLT 1 is effective for the case where the fracture toughness of the base metal is extremely excellent, but when the fracture toughness of the base metal is insufficient, a brittle crack which is diverted to the base metal side propagates long and the strength of the structure is liable to remarkably fall. Further, there are the problems that the volume of the back filled weld zone becomes large, the process time becomes long, and the production costs increase.
Further, a welded structure wherein, in a region where it is desired to arrest a brittle crack which occurs in a welded joint, a plate-shaped insert material is welded so as to run intersecting the weld line and, as the insert material, one given a suitable texture at the front layer region of a thickness of a plate thickness ratio of the front surface or back surface of 2% or more is used has been proposed (for example, PLT 2). However, if using the welded structure described in PLT 2 for a large-sized building, for example, a brittle crack which propagates along the welded joint will propagate through the welded joint formed by welding the insert material to the steel plate and is liable to enter the insert material, propagate through the inside of the insert material as is, and again propagate through the welded joint. On the other hand, if a brittle crack which propagates through a welded joint is diverted to the base metal side at a position of the insert material and the welded joint which welds the insert material to the steel plate, in the same way as the above, if the base metal is insufficient in toughness, there may be the problem of a brittle crack propagating long and the strength of the welded structure remarkably falling.

Document JP- A- 2005 319 516 discloses another crack arrester, formed as an insert welded so as to intersect the weld line.

Citation List

Patent Literature

PLT 1: Japanese Patent Publication (A) No. 2005-131708
PLT 2: Japanese Patent Publication (A) No. 2007-098441

Summary of Invention

Technical Problem

Therefore, the present invention was made in consideration of the above problem and has as its object the provision of a welded structure having excellent brittle crack propagation resistance which can keep a brittle crack from propagating through a welded joint or the base metal and can prevent fracture of the welded structure even when a brittle crack occurs in a welded joint.

Solution to Problem

The inventors engaged in intensive research on an arrester member provided on a welded joint of steel plates and a welded joint of an arrester member and steel plate for preventing a brittle crack from being propagated through the welded joint or the base metal when a brittle crack occurs in a welded joint of a welded structure.

As a result, they discovered that by suitably designing the shape of the arrester member and the properties of the steel plate, it is possible to suppress propagation of a brittle crack in a welded joint and a base metal and prevent large-scale fracture from occurring in a welded structure and thereby completed the present invention.

Hence, the invention proposes a welded structure according to claim 1, or according to claim 2

Note that, in the present invention, a part including the weld metal and the weld heat affected zone is defined as the "welded joint". Further, the "brittle crack arrest toughness Kca" is the value at the temperature at which the welded structure is used or at the design temperature.

Advantageous Effects of Invention

According to the welded structure of the present invention, at least one location of a welded joint is provided with a crack control part which has an arrester member and arrester welded joints which are formed between that and the base metal steel plates, so even if a brittle crack occurs in a welded joint, the brittle crack which propagates through the welded joint can be  diverted by the crack control part to a location of the steel plate base metal with a high crack arrest performance or can be blocked by the crack control part and therefore the brittle crack can be kept from propagating through the welded joint or the base metal. Therefore, a welded structure which can prevent in advance the occurrence of large-scale fracture can be obtained with a high production efficiency and low cost. By having such a welded structure according to the present invention used for large-sized ships first and foremost and also building structures, civil engineering steel structures, and other various types of welded structures, the demands for larger sizes of welded structures, higher safety with respect to fracture, higher efficiency of welding in construction, greater economy of the steel materials, etc. are simultaneously met, so the effect in industry is immeasurable.

Brief Description of Drawings

FIG. 1 gives a schematic view which explains the present invention, that is, a plan view which shows the state where part of a steel plate welded joint formed by welding steel plates together is provided with a crack control part comprising an arrester member and arrester welded joints.

FIG. 2 gives schematic views which explain the state of advance of a brittle crack in the case where part of a steel plate welded joint is provided with a crack control part shown in FIG. 1.

FIG. 3 gives schematic views which explain an example of a welded structure according to the present invention, that is, plan views which show the state where part of a steel plate welded joint is provided with a crack control part comprising an arrester member and arrester welded joints.

FIG. 4 gives views for explaining the shapes of an arrester member, in particular, the shapes of outer edges of brittle crack auxiliary countering sides.

FIG. 5 is a schematic view which explains the case of application of a welded structure according to the present invention to a ship welded structure.

FIG. 6 is a view similar to FIG. 3 which explains another example of a welded structure according to the present invention.

FIG. 7 is a view similar to FIG. 3 which explains another example of a welded structure according to the present invention.

FIG. 8 is a view similar to FIG. 3 which explains another example of a welded structure according to the present invention.

FIG. 9 gives views which explain a method of fabrication of a welded joint test piece which is used in an embodiment of the present invention.

FIG. 10 gives views which explain a tensile test method for evaluating the resistance to brittle crack propagation in an embodiment of the present invention.

Description of Embodiments

Below, embodiments of a welded structure having excellent brittle crack propagation resistance of the present invention will be explained in detail while referring to the drawings. Note that, the present embodiments are explained in detail for furthering understanding of the gist of the invention, so do not limit the present invention unless particularly indicated otherwise.

In the past, a brittle crack which occurred in a steel plate welded joint mainly propagated along the longitudinal direction of the steel plate welded joint. For this reason, there was the problem that a brittle crack which occurred at a steel plate welded joint formed a starting point liable to cause large fracture in the welded structure as a whole.

The inventors etc. discovered that to effectively control the propagation direction of such a brittle crack and keep the crack from propagating in the welded structure, it is important to further suitably design the shape of the arrester member and the properties of the steel material in the above prior art.

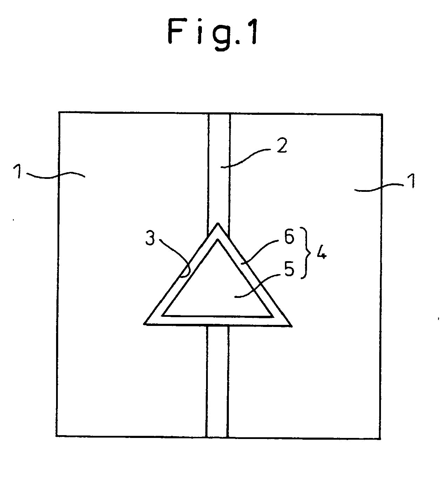

The basic principle of the present invention will be explained using FIG. 1.

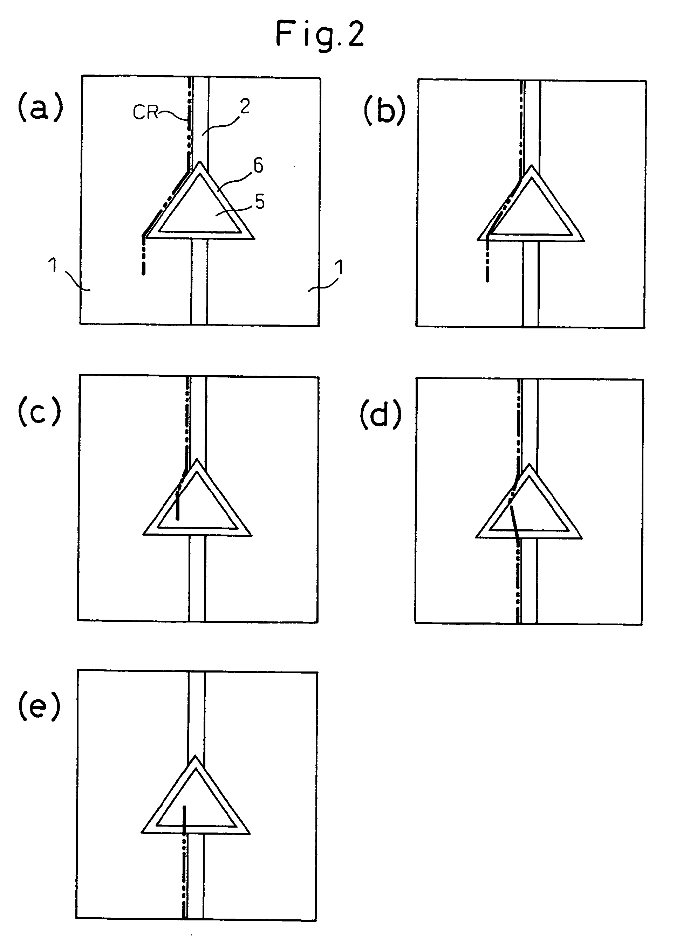

In the present invention, in the middle of a steel plate welded joint 2 formed by butt welding the steel plates 1 and 1, a crack control part 4 is provided to split the steel plate welded joint 2. The crack control part 4 comprises an arrester member 5 which is inserted into a through hole 3 which is formed from the steel plate welded joint across the steel plates and of arrester welded joints 6 which are formed by butt welding of the arrester member 5 to the steel plates 1. The arrester member 5 is formed from a steel material which has a higher brittle crack arrest toughness Kca than the steel plates 1 and is made a shape so as to form arrester welded joints 6 which have a main countering side, where propagation of a brittle crack is expected, made slanted with respect to the steel plate welded joint 2. The mechanism of control and suppression of the propagation of a brittle crack which occurs in the steel plate welded joint 2 by providing this crack control part 4 differs depending on the value of the ductile-brittle transition temperature(DBTT) vTrs3 (°C) which expresses a toughness of the weld metal in the arrester welded joints in some cases. For example, it becomes as in FIGS. 2-a and b.

A brittle crack CR which occurs at one side of the steel plate welded joint 2 in the longitudinal direction propagates along a boundary of a steel plate 1 and the steel plate welded joint 2 (or heat affected zone of steel plate base metal). When the crack CR reaches an arrester welded joint 6, if the vTrs value (vTrs3) of the joint is relatively superior compared with the base metal, the crack CR does not enter the arrester welded joint 6, but, as shown in FIG. 2-a, propagates along the boundary of the steel plate 1 and arrester welded joint 6 (or heat affected zone of steel plate base metal) and reaches the base metal zone of the steel plate 1 at the horizontal width direction end of the arrester welded joint. At this time, even if entering the base metal part, that is, steel plates 1, if the steel plate 1 has a high brittle crack arrest toughness Kca, the advance of the crack CR can be arrested there.

Further, when the vTrs value of the arrester welded joint 6 is relatively inferior compared with the base metal, the crack CR also sometimes enters the arrester welded joint 6, but since the Kca of the arrester member 5 is high, the crack does not enter the arrester member. As shown in FIG. 2- b, it propagates through the inside of the arrester welded joint 6 along the boundary of the arrester member 5 and reaches the base metal part of the steel plate 1. At this time, the brittle crack arrest toughness Kca of the steel plate 1 is high, so in the same way as the case of FIG. 2- a, the advance of the crack CR can be arrested there.

In the present invention, by forming the arrester welded joint 6 which is slanted with respect to the steel plate welded joint 2 continuously with the steel plate welded joint 2, it is possible to easily guide advance of the brittle crack from the steel plate welded joint 2 to the arrester welded joint.

Further, if DBTT vTrs3 of the arrester welded joint is inferior to the vTrs1 of the base metal, depending on the conditions of the arrester member, sometimes the result becomes like in FIGS. 2- c and d. For example, if the thickness of the arrester member 5 is smaller than the thickness of the steel plate 1, a crack CR which enters the arrester welded joint 6 sometimes next enters the arrester member 5. In such a case as well, if making the Kca of the arrester member 5 higher and making the height of the arrester member in a direction along the steel plate welded joint sufficient, it is possible to arrest the advance of the crack CR inside the arrester member 5.

Conversely, if the Kca of the arrester member 5 is low, if the height of the arrester member is not sufficient, etc., as shown in FIG. 2- d, the crack can pass through the arrester member 5, return to the steel plate welded joint, and again propagate through the steel plate welded joint.

Further, even if a brittle crack CR propagates from the other auxiliary countering side in the longitudinal direction of the steel plate welded joint 2, if making the Kca of the arrester member 5 higher and making the height of the arrester member in a direction along the steel plate welded joint sufficient, as shown in FIG. 2- e, it is possible to arrest the advance of the crack CR inside the arrester member 5.

The present invention was made after further study of the conditions of the steel plate which blocks advance of a brittle crack, conditions of the arrester member or arrester welded joint which control advance of a brittle crack, etc. under this basic principle. Below, embodiments of the present invention will be explained in detail.

First Embodiment

Overall Constitution

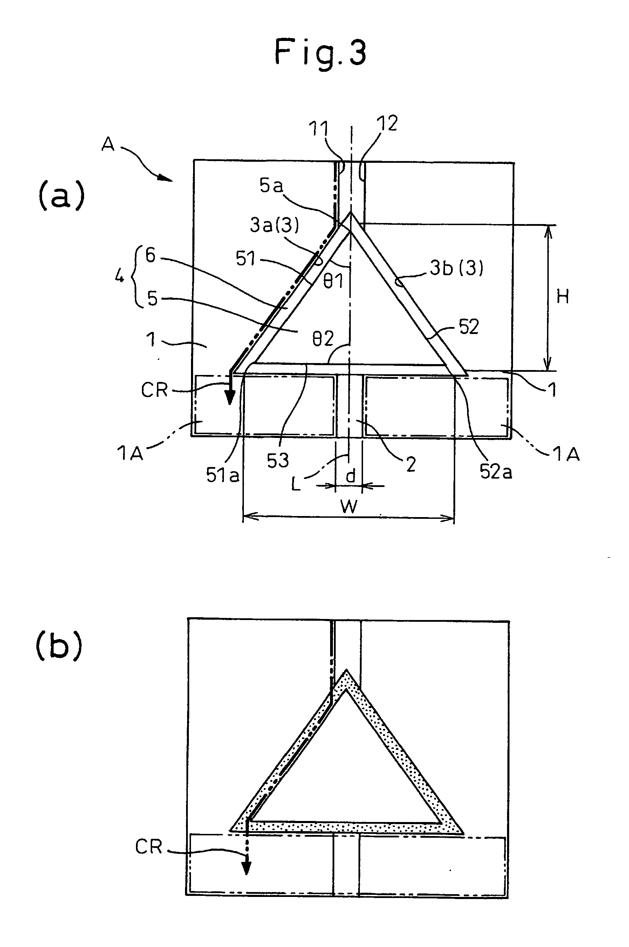

The first embodiment, as shown in FIG. 3, is an example of a case where a steel plate welded joint 2 is formed by butt welding steel plates 1 and 1 with regions 1A and 1A of at least parts of the base metal with a brittle crack arrest toughness Kca of 4000N/mm$^{1.5}$ or more. Below, the embodiment of application to a joint will be called a "welded structure A" in the explanation.

In the welded structure A, at least one location of the steel plate welded joint 2 is provided with a crack control part 4 so as to adjoin the regions 1A. The position where the crack control part 4 is provided is preferably in the middle of the steel plate welded joint where initiation and propagation of a crack are anticipated when exposed to a large fracture energy due to collision, an earthquake, etc.

The crack control part 4 comprises an arrester member 5 which is provided so as to pass through the steel plates 1 and comprises a steel material with a brittle crack arrest toughness Kca of 6000N/mm$^{1.5}$ or more and arrester welded joints 6 which are formed by butt welding of the arrester member 5 to the steel plates 1.

The arrester welded joints 6 have a main countering side, where a brittle crack is expected to propagate, formed continuously with the steel plate welded joint 2 and formed slanted with respect to the steel plate welded joint 2 so as to guide advance of a brittle crack from the steel plate welded joint 2 to the arrester welded joints. For this reason, the arrester member 5 is formed so that outer edges 51 and 52 which extend from the weld line L of the steel plate welded joint 2 are slanted from the longitudinal direction of the steel plate welded joint 2 by an angle of 15° to 50° in range. In the welded structure A of FIG. 3, the example is shown where the arrester member 5 is formed as a substantially equilateral triangle when seen from a plan view.

Steel Plates

The steel plates 1 comprise a steel material with at least part of the base metal having a brittle crack arrest toughness Kca of 4000N/mm$^{1.5}$ or more. A large-sized welded structure is not always constructed using steel materials having entire regions having a brittle crack arrest toughness Kca in the high level of 4000N/mm$^{1.5}$ or more. Steel plates raised in brittle crack arrest toughness at a partial region of the steel plates by heat treatment in the production process and even steel plates having an entire region with a Kca of 4000N/mm$^{1.5}$ or more which fall in Kca at a partial region due to heat treatment applied during bending etc. are sometimes used.

In the welded structure A, as shown in FIG. 3, at the regions 1A at locations adjoining the arrester welded joints 6 (in FIG. 3-a, bottom in vertical length direction), the base metal has a brittle crack arrest toughness Kca made 4000N/mm$^{1.5}$ or more. The arrester welded joint 6 which is formed extending from the weld line L of the steel plate welded joint 2 at the back end (horizontal width direction ends of arrest member) 51a and 52a sides of the slanted outer edges 51 and 52 of the insert member 5 is formed so as to adjoin the regions 1A. 0030 The chemical compositions, microstructures, etc. of the steel plates 1 are not particularly limited. It is possible to use steel plates provided with properties which are conventionally known in the fields of ship welded structures, building structures, civil engineering steel structures, etc.

For example, steel having a basic chemical composition including, by mass%, C: 0.01 to 0.18%, Si: 0.01 to 0.5%, Mn: 0.3 to 2.5%, P: 0.01% or less, and S: 0.001 to 0.02%, further including in this composition, in accordance with the performance requested, at least one type of element of N: 0.001 to 0.008%, B: 0.0001 to 0.005%, Mo: 0.01 to 1.0%, Al: 0.002 to 0.1%, Ti: 0.003 to 0.05%, Ca: 0.0001 to 0.003%, Mg: 0.001 to 0.005%, V: 0.001 to 0.18%, Ni: 0.01 to 5.5%, Nb: 0.005 to 0.05%, Cu: 0.01 to 3.0%, Cr: 0.01 to 1.0%, and REM: 0.0005 to 0.005%, and having a balance of Fe and unavoidable impurities may be mentioned.

In particular, as steel plate having a brittle crack arrest toughness Kca of $6000N/mm^{1.5}$ or more, thick-gauge steel plate of a composition such as shown in Japanese Patent Publication (A) No. 2007-302993, Japanese Patent Publication (A) No. 008-248382, etc. may be suitably used.

As shown in FIG. 3-a, in the welded structure A, a steel plate welded joint 2 is formed by butt welding the above such steel plates 1 and 1. Further, the steel plates 1 which are joined by this steel plate welded joint 2 are provided with a through hole 3 for positioning of the arrester member 5, details explained later, so as to be symmetric at the steel plates 1 about the weld line L of the steel plate welded joint 2.

The plate thickness of the steel plates 1 is preferably made 25 mm to 150 mm in range. If the plate thickness of the steel plates 1 is in this range, it is possible to secure the strength of the steel plates in the welded structure and possible to obtain excellent resistance to brittle crack propagation. In particular, in a welded structure using 40 mm or thicker steel plates, there is no effective means for arresting a brittle crack. In a welded structure using steel plates with a plate thickness of 40 mm or more, more preferably 50 mm to 100 mm, the present invention is more effectively worked.

Further, in the present embodiment, at least part of the base metal forming the steel plates 1, in the example shown in FIG. 3, the region 1A, is given a brittle crack arrest toughness Kca of $4000N/mm^{1.5}$ or more, but $6000N/mm^{1.5}$ or more is preferable from the viewpoint of further improvement of the resistance to brittle crack propagation.

Arrester Member

The arrester member 5, as shown in FIG. 3, is preferably arranged in a through hole 3 formed at the steel plates which are joined by the steel plate welded joint 2 so as to be symmetric at the steel plates 1 about the weld line of the steel plate welded joint 2. Further, the arrester member 5 forms the crack control part 4 together with the arrester welded joints 6 which are formed by butt welding to the weld ends of the steel plates 1 which are exposed inside the through hole 3. Even if a brittle crack occurs in the steel plate welded joint 2, the arrester member 5, by formation of the above-mentioned crack control part 4 as explained above, controls the propagation direction of that crack and prevents the crack from propagating so as to pass through the steel plate welded joint 2 and sever the steel plates 1 and 1 which are welded together.

The arrester member 5 comprises a steel material with a brittle crack arrest toughness Kca = $6000N/mm^{1.5}$ or more. Further, the arrester member 5 shown in FIG. 3 is formed so that the outer edges 51 and 52 extending from the vertex 5a at the main countering side, where a brittle crack is expected to propagate, are slanted by an angle θ1 of 15° to 50° in range with respect to the longitudinal direction of the steel plate welded joint 2 (weld line L). Further, the arrester member 5 is formed so that the outer edge 53 which forms the auxiliary countering side against a brittle crack is connected to the back ends 51a and 52a of the slanted outer edges 51 and 52, whereby a substantially equilateral triangular shape when seen from a plan view is formed.

By making the slant angle θ1 of the arrester member and the arrester welded joints the above range, even if a brittle crack which propagates through the steel plate welded joint 2 occurs, this crack is guided to progress from the steel plate welded joint 2 along an arrester welded joint 6 so it becomes possible to stably divert it to the base metal side of the steel plate 1.

If the slant angle θ1 is less than 15°, the distance between the back ends 51a and 52a of the slanted outer edges 51 and 52 of the arrester member and the steel plate welded joint 2 is short, so after a brittle crack propagated through the steel plate welded joint is propagated along an arrester welded joint 6, it is liable to not be diverted to the base metal side of the steel plate and to again enter the steel plate welded joint from the back ends 51a and 52a and propagate.

Further, if the slant angle θ1 is over 50°, it approaches the angle by which the longitudinal direction of the steel plate welded joint and the outer edges perpendicularly intersect, that is, 90°, so it becomes difficult to control a brittle crack which propagates through the steel plate welded joint to propagate along a steel plate 1 and an arrester welded joint 6. For this reason, a brittle crack is liable to directly enter the arrester member and to not be arrested in propagation but to pass through the arrester member and again enter the steel plate welded joint and propagate.

The preferable range of the slant angle θ1 for guiding a brittle crack to propagate along an arrester welded joint 6 is 20° to 45°, while the more preferable range is 25° to 40°.

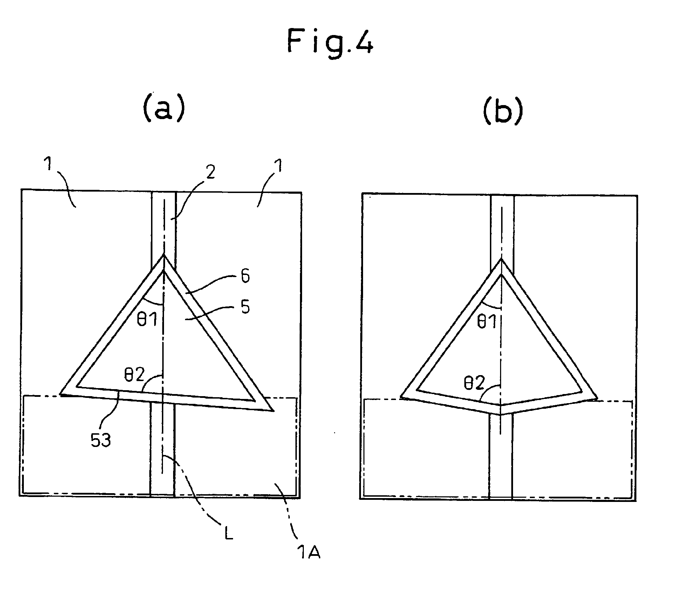

In the welded structure A of FIG. 3, the example was shown where the arrester member 5 was formed as an approximately equilateral triangle seen from a plan view, but the shape of the arrester member is not limited to this. For example, an isosceles triangle, a triangle asymmetric with respect to the weld line L such as shown in FIG. 4-a, and, furthermore, as shown in FIG. 4-b, even a case where the outer edge 53 at the auxiliary countering side connecting the back ends 51a and 52a of the slanted outer edges 51 and 52 are not straight lines are also included.

In each case, the angle θ2 formed by the outer edge 53 of the auxiliary countering side connecting the back ends 51a and 52a of the slanted outer edges 51 and 52 of the arrester member and the weld line L is preferably 70° to 110°. If the angle is less than 70°, a brittle crack which has propagated along an arrester welded joint 6 is liable to not be diverted to the base metal side of the steel plate, but to propagate along the outer edge 53 at the auxiliary countering side and again enter the steel plate welded joint. Further, if the angle is over 110°, depending on the shape of the arrester member, when a brittle crack enters the arrester member, the propagation of the crack is liable to not be arrested. A more preferable range of the angle θ2 is 80° to 100°.

Note that, in FIG. 4, θ2 was shown for one side of the weld line L, but the same is true for the other side.

The arrester member 5 must have dimensions of a height H (mm) along the longitudinal direction of the steel plate welded joint, the horizontal width W in the direction intersecting the longitudinal direction of the steel plate welded joint, and a plate thickness "t" satisfying the relationships which are expressed by the following formulas (1) to (3).

$$1.2T \leq H \quad \ldots \ldots \quad (1)$$

$$3.2d \leq W \quad \ldots \ldots \quad (2)$$

$$0.75T \leq t \leq 1.5T \quad \ldots \ldots (3)$$

where, in the above formulas (1) to (3), "T" indicates the plate thickness (mm) of the steel plate, while "d" indicates the width (mm) of the weld metal in the steel plate welded joint.

Note that, the height H and width W of the arrester member are based on the center point of the weld metal of the arrester welded joints. The height H of the arrester member in the case such as shown in FIG. 4 is the distance between the intersecting locations of the arrester welded joints and steel plate welded joint, while the width W is the maximum width in the direction perpendicular to the steel plate welded joints. Further, the width "d" of the weld metal is made a broader width when weld metal is formed at both surfaces of the steel.

The inventors ran multiple courses of fracture tests on welded structures while changing the shape, dimensions, etc. of the arrester member in various ways. As a result, they obtained the above relationships effective for preventing a brittle crack from propagating through a steel plate welded joint or steel plate base metal over a long distance.

The formula (1) shows that there is a correlative relationship in the effect of diverting a crack between the height H of the arrester member 5 and the thickness "T" of the steel plate 1.

If DBTT vTrs3 expressing the toughness of the weld metal at the arrester welded joints is inferior to the vTrs1 expressing the base metal toughness of the steel plate etc., a brittle crack which has advanced through the steel plate welded joint next enters an arrester welded joint. At this time, if the height dimension H of the arrester member 5 is smaller than 1.2 times the plate thickness T of the steel plate 1, in the case of each plate thickness, a crack which has advanced enters the arrester member 5 without being diverted along the slanted outer edge of the arrester member and advance of the crack inside of the arrester member 5 cannot be arrested.

The energy of the advancing crack is proportional to the plate thickness T of the steel plate. The drive force for diverting the direction of advance of a crack may be considered to depend on the stress which is applied to the arrester member 5, but this is because this stress is proportional to the height dimension H of the arrester member 5, so based on the correlative relationship of the two, the above formula (1) was set to define the lower limit value of the height dimension H of the arrester member 5. The upper limit value of H is not set, but is naturally defined to a range within the dimensions of the welded joint 2 at the time of working the invention.

The formula (2) shows that there is a correlative relationship in the effect of diverting a crack between the width W of the arrester member 5 and the width "d" of the weld metal in the steel plate welded joint.

A crack which has progressed through the steel plate welded joint 2 is changed in direction of advance by the arrester member 5 and progresses along the outer edge 51 or 52. At this time, if the width dimension W of the arrester member 5 is smaller than 3.2 times the width "d" of the weld metal, a crack which reaches the back end 51a or 52a may propagate through either the left or right of the outer edge 53 at the auxiliary countering side, again return to the steel plate welded joint 2, proceed as is, and fail to stop.

The drive force for making a crack which reaches the back ends 51a and 52a of the outer edges 51 and 52 advance toward the steel plate 1 substantially parallel to the weld metal of the steel plate welded joint may be considered to depend on the stress which is applied to the arrester member 5 at the time of a test, but this is because this stress is proportional to the distance from the intersection of the weld line L which passes through the center of the welded joint 2 and the outer edge 53 at the auxiliary countering side. Due to the above correlative relationship, the above formula (2) was set to define the lower limit value of the width dimension W of the arrester member. The upper limit value of W is not set, but is naturally defined to a range within the dimensions of the welded joint 2 at the time of working the invention.

The formula (3) shows there a correlative relationship for the effect of diverting a crack between the plate thickness "t" of the arrester member 5 and the plate thickness T of the steel plate 1.

If the plate thickness "t" of the arrester member 5 is smaller compared than 0.75 time the plate thickness of the steel plate 1, the advancing crack will enter the arrester member 5 without being diverted and the crack will not be able to be arrested inside of the arrester member 5. This is because the energy of the advancing crack is proportional to the plate thickness "T", but if the brittle crack arrest toughness Kca of the arrester member 5 is exactly $6000N/mm^{1.5}$, if the plate thickness "t" of the arrester member 5 is smaller than 0.75 time the plate thickness of the steel plate 1, the stress inside the arrester member is high in the range of the plate thickness of the steel plate tested, so the crack cannot be arrested.

On the other hand, if the plate thickness "t" of the arrester member 5 is larger than 1.5 times the plate thickness of the steel plate 1, due to the effect of the stress concentration at the toe of weld metal of an arrester welded joint, it became clear that the brittle crack propagates along the boundary of the arrester welded joint and the steel plate welded joint and bypasses the outer edge of the brittle crack auxiliary countering side. The reason is believed to be that the stress applied to the arrester member 5 which provides the drive force for diversion of the direction of advance of a crack becomes weaker due to the plate thickness "t" becoming larger.

To more reliably stop the propagation of a brittle crack, in the above formula (1), H/T is preferably 2.0 or more, more particularly, to stop the advance of a crack from the bottom edge side shown in FIG. 2-e, it is preferably 2.5 or more, more preferably 3.0 or more. Further, in the above formula (2), W/d is preferably 5.0 or more, more preferably is 7.0 or more. Furthermore, the height H of the arrester member is 250 mm or more or 300 mm or more, more preferably is 400 mm or more, while the width W is 200 mm or more or 250 mm or more, more preferably is 300 mm or more.

By making the dimensional values of the arrester member 5 ones in the above relationships, even when a crack occurs in the steel plate welded joint 2, the propagation direction of the crack can be effectively diverted to the base metal side of the steel plate 1.

When the relationship of the dimensional values of the arrester member does not satisfy the relationships expressed by the above formulas (1) to (3), depending on the state of the crack occurring in the steel plate welded joint, as shown in FIGS. 2-c and d, this crack may progress to the arrester member and further not stop inside the arrester member, but end up propagating through the steel plate welded joint.

The material of the arrester member 5 is not particularly limited in chemical compositions, method of production, microstructures, etc. so long as being steel plate having the property of the above-mentioned brittle crack arrest toughness $Kca=6000N/mm^{1.5}$ or more. Any can be suitably employed. By using such steel plate, even if a crack occurs in the steel plate welded joint 2, the propagation direction of this crack can be effectively diverted and controlled.

Further, in the welded structure A, the relationship between DBTT vTrs2 (°C) expressing the toughness of the arrester member 5 and DBTT vTrs1 (°C) expressing the base metal toughness of the steel plate 1 more preferably satisfies the relationship shown by the following formula (4)

$$vTrs2 \leq vTrs1-20...(4).$$

By the relationship between the toughness of the arrester member 5 and the base metal toughness of the steel plate 1 satisfying the above relationship, even if a situation occurs in which a brittle crack enters an arrester welded joint, it becomes possible to reliably effectively divert the propagation direction of the crack to the base metal side of the steel plate 1. If the relationship between the toughness of the arrester member and the base metal toughness of the steel plate does not satisfy the above relationship, depending on the state of the brittle crack, this crack is liable to enter the arrester member and pass through the arrester member to end up propagating through the steel plate welded joint.

Note that, in the present embodiment, the explanation was given of a configuration welding only a single arrester member 5 to the steel plates 1, but the invention is not limited to this. For example, it is also possible to use two or more arrester members stacked together. These may be suitably employed.

Control of Propagation Direction of Brittle Crack

The control of the crack propagation direction in the case where a brittle crack occurs in the steel plate welded joint 2 in the welded structure A configured in the above way will be explained below.

As shown in FIG. 3-a, a brittle crack CR which occurs at one side of the steel plate welded joint 2 in the longitudinal direction (top in vertical length direction in FIG. 3-a) starts being propagated toward the other side of the steel plate welded joint 2 in the longitudinal direction (bottom in vertical length direction in FIG. 3-a) (see two-dot chain line arrow in FIG. 3-a). At this time, if DBTT vTrs3 expressing the toughness of the weld metal of the arrester welded joints 6 is sufficiently lower than the transition temperature vTrs1 of the base metal steel plate, a brittle crack CR which propagates through the steel plate welded joint 2 in the longitudinal direction does not enter an arrester welded joint 6, but as illustrated, is guided to the arrester welded joint 6 formed along the slanted outer edge 51 of the arrester member 5 (or the outer edge 52) and propagates along the boundary of the arrester welded joint 6 and the steel plate 1. Further, the crack is diverted from the horizontal width direction end of the crack arrester welded joint 6 to the base metal side of the steel plate 1 and is arrested inside the region 1A positioned facing the horizontal width direction end with a brittle crack arrest toughness Kca of 4000N/mm$^{1.5}$ or more.

In the above way, to divert the advance of the brittle crack before an arrester welded joint 6, the relationship between DBTT vTrs3 (°C) of the weld metal forming the arrester welded joints 6 and DBTT vTrs1 (°C) of the steel plates 1 preferably satisfies the following formula (5).

$$vTrs3 \leq vTrs1-20... \ (5)$$

By having the relationship between the toughness of the weld metal forming the arrester welded joints 6 and the base metal toughness of the steel plates 1 satisfy the above relationship, even if a crack occurs in the steel plate welded joint 2, it becomes possible to effectively divert the propagation direction of the crack to the base metal side of the steel plates 1. In this case, by making the vTrs3 of the weld metal forming the arrester welded joints 6 lower and making the toughness higher, the action of the crack control part 4 diverting the propagation direction of the brittle crack occurring at the steel plate welded joint 2 to the base metal side of the steel plates 1 is effectively obtained.

If the relationship between the toughness of the weld metal forming the arrester welded joints and the base metal toughness of the steel plates does not satisfy the above relationship, depending on the state of the crack occurring at the steel plate welded joint, this crack sometimes will enter an arrester welded joint and further will enter the arrester member.

Further, if the transition temperature vTrs3 of the weld metal of the arrester welded joints 6 is higher than the transition temperature vTrs1 of the base metal steel plates (vTrs3 vTrs1), sometimes a brittle crack CR which propagates through the steel plate welded joint 2 in the longitudinal direction will enter an arrester welded joint 6. In this case as well, the Kca of the arrester member 5 is high, so the crack CR does not enter the arrester member. As shown in FIG. 3- b, it propagates along the boundary of the arrester welded joint 6 and the arrester member 5, is diverted to the base metal side of the steel plates 1, and similarly is arrested at the position of the region 1A.

Further, as explained above FIG. 3- b, if the brittle crack CR enters an arrester welded joint 6, the crack CR may conceivably enter the arrester member 5, but in that case as well, the brittle crack arrest toughness Kca of the arrester member 5 is high, so the advance of the crack Cr inside of the arrester member 5 can be arrested.

Furthermore, if DBTT vTrs3 (°C) of the weld metal is high, a brittle crack easily propagates. Utilizing this property, it is possible to make the relationship between the vTrs3 and DBTT vTrs1 (°C) of the steel plate base metal satisfy the following formula (6) and make the propagation route of the brittle crack as shown in FIG. 3- b so as to divert the brittle crack reliably to the base metal.

$$0 \geq vTrs3 \geq vTrs1+20... \ (6)$$

Note that, the upper limit of vTrs3 has to be made 0°C or less so as not to form an origin of a brittle crack in the arrester welded joints.

In order for the crack control part to exhibit the above function, it is sufficient to predict the steel plate welded joint where a crack may occur when the welded structure is exposed to fracture energy and to provide one or more crack control parts considering the direction of advance of the crack of the welded joint. The crack control part 4, as explained using FIG. 2, can arrest the propagation of a crack from both directions, but to more reliably arrest the propagation of a crack, it is also possible to change the direction of the arrester member and provided crack control parts at two locations a distance away from each other. As the distance, for example an extent of the height H of the arrester member is sufficient.

Note that when providing two arrester members changed in orientation, if the distance between the two becomes extremely short or the two contact (as a result, forming a diamond shape), a propagation route is formed by the arrester welded joint, so the crack will end up passing through an arrester welded joint and again return to the welded joint 2 and the effect of crack arrest can no longer be exhibited.

Method of Preparation of Crack Control Part

Below, one example of the method for preparation of a crack control part 4 in the above- mentioned welded structure A will be explained.

The welded structure A of the present embodiment is an example of provision of a crack control part 4 to a welded structure formed by butt welding steel plates with at least partial regions with a brittle crack arrest toughness Kca of 4000N/mm$^{1.5}$ or more.

The crack control part is provided at least at one location in the middle of the steel plate welded joint where crack initiation and propagation are anticipated when exposed to a large fracture energy such as a collision or earthquakes. At this time, the crack control part 4 has to be provided so that a horizontal width direction end of an arrester welded joint which is continuously formed from the steel plate welded joint adjoins at least a region with a Kca of the steel plate of 4000N/mm$^{1.5}$ or more.

To provide a crack control part 4, first, a through hole 3 for placement of the arrester member 5 is formed. The through hole may be formed at the stage of the steel plates by a method of cutting the portions for forming the through hole in advance, a method of cutting the steel plates in a state of temporary joint for welding, a method of forming a through hole after welding the steel plates, etc. Any of these methods is  acceptable. It is also possible to form the through hole 3 in an existing welded structure for application to the present invention of course.

When forming the through hole 3 before welding the steel plate, first the steel plates are cut to form the through hole 3 (3a, 3b) so as to open at the grooves 11 and 12 of the steel plates 1. Next, leaving the parts forming the through holes 3a and 3b, the grooves 11 and 12 of the steel plates 1 are butt welded so as to form the steel plate welded joint 2.

Next, the arrester member 5 comprising the steel material with a brittle crack arrest toughness Kca of 6000N/mm$^{1.5}$ or more is inserted into the formed through hole 3. Next, the slanted outer edges 51 and 52 and the auxiliary countering side outer edge 53 of the arrester member 5 are butt welded to the exposed groove surface of the respectively facing steel plates to thereby form the arrester welded joints 6. By such a procedure, a crack control part comprising an arrester member 5 and arrester welded joints 6 is formed so as to become symmetric at the steel plates 1 about the weld line L of the steel plate welded joint 2.

In the present embodiment, in the step of forming the crack control part, the arrester member 5 is formed to pass through the steel plates 1 so that its outer edges 51 and 52 which extend from the weld line L of the steel plate welded joint 2 are slanted with respect to the longitudinal direction of the steel plate welded joint 2 by an angle of 15° to 50° in range.

Further, the arrester member 5 is shaped, as shown in FIGS. 3 and 4, as a substantially triangular shape when seen overall in a plan view. It is arranged so that the vertex 5a of the arrester member 5 is positioned on the weld line L of the steel plate welded joint 2, is formed so that the slanted outer edges 51 and 52 which extend from the vertex 5a of the arrester member 5 are slanted with respect to the longitudinal direction of the steel  plate welded joint 2 by an angle of 15° to 50° in range, and is further formed so that the outer edge 53 at the auxiliary countering side which connects the back ends 51a and 52a of the slanted outer edges 51 and 52 intersects the weld line L by an angle of 70° to 110° in range.

In the present embodiment, the welding method and the welding materials when butt welding the steel plates 1 together and the steel plates 1 and the arrester member 5 are not particularly limited. However, to raise the toughness against fracture of the arrester welded joints 6 themselves, for example, as the welding method, it is preferable to employ shielded metal arc welding (SMAW) or carbon dioxide gas arc welding ($CO_2$ welding) and, further, to make the compositions of the welding wire high in Ni. Further, to suppress brittle crack propagation as much as possible and, furthermore, to prevent initiating new fatigue cracks or brittle cracks at the steel plate welded joint 2 and arrester welded joints 6, it is preferable to completely fill the welded joints with weld metal so as to ensure there are no weld defects.

Using the above procedure, it is possible to produce the welded structure A having excellent brittle crack propagation resistance of the present embodiment such as shown in FIG. 3.

Example of Ship Structure Applying Welded Structure

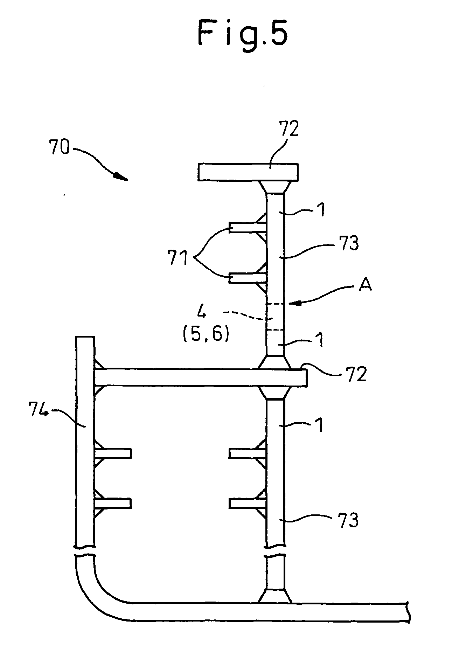

An example of a ship structure applying the above-mentioned welded structure A will be shown in the schematic view of FIG. 5.

As shown in FIG. 5, a ship structure 70 is generally configured provided with horizontal stiffeners (reinforcing materials) 71, deck plates (horizontal members) 72, inner hull plating or hatch side coamings (vertical members) 73, and outer hull plating or sheer strakes 74. Further, the illustrated ship structure 70 is structured provided with the welded structure of the  present embodiment by providing a crack control part 4 at part of the longitudinal direction of a steel plate welded joint (not shown in FIG. 5) which is formed by butt welding a plurality of steel plates 1 forming the inner hull plating or hatch side coamings 73.

According to the ship structure 70 of the above constitution, by applying the constitution of the welded structure A of the present embodiment, even if a brittle crack which propagates along the steel plate welded joint occurs, the crack control part 4 enables the propagation direction of the crack to be effectively controlled. Due to this, it is possible to stably arrest a brittle crack occurring in a steel plate welded joint and possible to prevent large scale fracture in a inner hull plating or hatch side coamings 73 and in turn the ship structure 70.

Second Embodiment

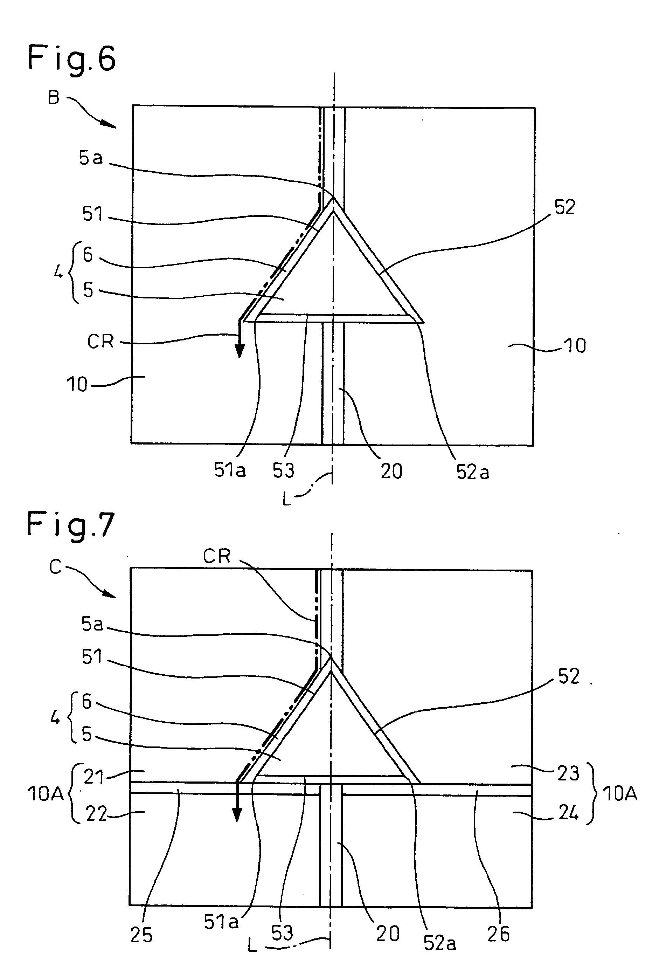

Below, a second embodiment of the present invention, that is, a welded structure B, will be explained while mainly referring to FIG. 6. Note that, in the following explanation, parts of the constitution common with the welded structure of the first embodiment explained above are assigned the same reference notations and detailed explanations are omitted. Further, the same is true for the explanations of the third and fourth embodiments.

The welded structure B of the present embodiment, while a detailed illustration is omitted in FIG. 6, has a base metal as a whole of the steel plates 10 with a brittle crack arrest toughness Kca of $4000 N/mm^{1.5}$ or more. On this point, it differs from the welded structure A of the first embodiment.

According to the welded structure B, if a brittle crack occurs in the steel plate welded joint 20, the crack which has propagated along the steel plate welded joint 20 can be made to propagate along the heat affected zone of base metal adjoining an arrester welded joint 6 (see two-dot chain arrow in FIG. 6). Further, even when entering an arrester welded joint 6, in the same way as the case shown in FIG. 3-b, it can be diverted to the base metal side of the steel plate 10 Further, in the same way as the welded structure A, a crack which is diverted to the base metal side of a steel plate 10 immediately stops at the steel plate 10, so the steel plate welded joint 20 will not fracture and, further, it becomes possible to prevent large-scale fracture from occurring in the welded structure B. Further, the welded structure B of the present embodiment more preferably has a base metal as a whole forming the steel plates 10 which has a brittle crack arrest toughness Kca of $6000 N/mm^{1.5}$ or more.

Third Embodiment

Below, a third embodiment of the present invention, that is, a welded structure C, will be explained in detail while referring mainly to FIG. 7. The welded structure C is an example of the case where the steel plates to be butt welded are formed by butt welding pluralities of small steel plates.

That is, as shown in FIG. 7, the steel plates 10A are formed by butt welding two or more small steel plates arranged in the longitudinal direction of the steel plate welded joint 20A (see reference numerals 21 to 24 in FIG. 7) . The steel plate welded joint 10 formed by butt welding these steel plates 10A and 10A is provided with a crack control part 4.

Between the small steel plates 21 and 22, small steel plate welded joints 25 and 26 are formed. The arrester welded joint 6 which is formed at the outer edge 53 side of the arrester member 5 is provided in contact with the small steel plate welded joints 25 and 26. For this reason, in the welded structure C, the outer edge 53 of the auxiliary countering side of the arrester member 5 (and outer edge of arrester member at horizontal width direction end side) is made the same shape as the shapes of the small steel plate welded joints 25 and 26.

In this way, the welded structure C differs from the welded structures A and B of the above-mentioned first and second embodiments.

Further, in the example shown in FIG. 7, for convenience in illustration, as the small steel plates, four small steel plates 21 to 24 are shown. The case is shown where the small steel plate 21 and the small steel plate 22 are joined by the small steel plate welded joint 25 and where the small steel plate 23 and the small steel plate 24 are joined by the small steel plate welded joint 26.

Further, the welded structure C of the present embodiment is given a brittle crack arrest toughness Kca of the base metal forming the small steel plate 22 and small steel plate 24 of $4000 N/mm^{1.5}$ or more, but the brittle crack arrest toughness Kca of the small steel plate 21 and small steel plate 23 is not particularly limited.

According to the welded structure C, in the same way as the above-mentioned welded structures A and B, even if a brittle crack occurs in the steel plate welded joint 20A, this brittle crack can be diverted by the slanted outer edge 51 (52) of the arrester member 5 or by an arrester welded joint 6 to the base metal side of the steel plate 10A (see two-dot chain arrow in FIG. 6). In the example shown in FIG. 7, a brittle crack CR which occurs in the steel plate welded joint 20A runs from the arrester welded joint 6 at the horizontal width direction end to reach the small steel plate welded joint 25, then enters the small steel plate 22 positioned facing that horizontal width direction end and having a brittle crack arrest toughness Kca of $4000 N/mm^{1.5}$ or more and is arrested inside of that steel plate.

In this way, a crack which is diverted to the base metal side of the steel plate 10A immediately stops at the small steel plate 22 with the high brittle crack arrest toughness Kca, so the steel plate welded joint 20A will not fracture and, further, it becomes possible to prevent a large-scale fracture from occurring in the welded structure C.

Further, the welded structure C of the present embodiment more preferably has a base metal of the small steel plates 22 and 24 forming the steel plate 10A which has a brittle crack arrest toughness Kca of 6000N/mm$^{1.5}$ or more.

Fourth Embodiment

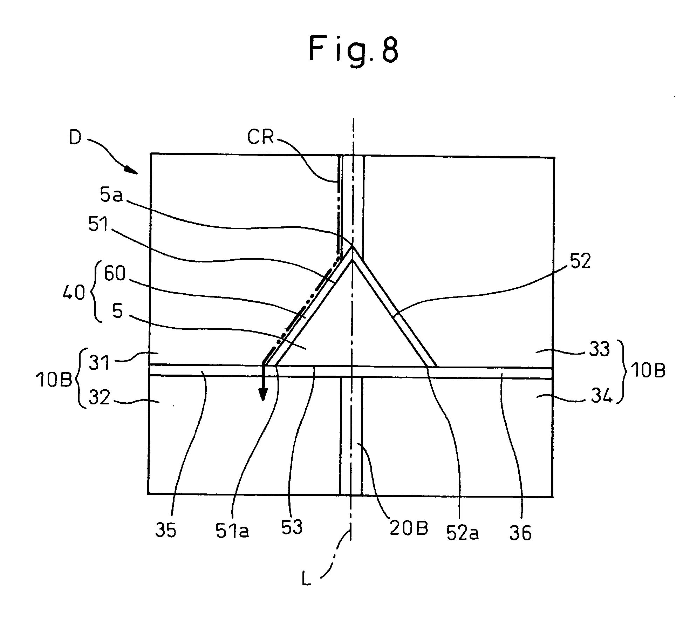

Below, a fourth embodiment of the present invention, that is, a welded structure D, will be explained in detail while referring mainly to FIG. 8.

The welded structure D, as shown in FIG. 8, is formed by butt welding steel plates 10B each comprising at least two small steel plates arranged in the longitudinal direction of the steel plate welded joint 20B (see reference numerals 31 to 34 in FIG. 8) . The steel plate welded joint 20B which is formed by butt welding the steel plates 10B and 10B is provided with a crack control part 4. On this point, the configuration is partially the same as the welded structure C of the third embodiment.

On the other hand, the welded structure D of the present embodiment, as illustrated, is configured including an arrester welded joint where small steel plate welded joints 35 and 36 which are formed by butt welding small steel plates are formed at the bottom edge (and outer edge of arrester member at horizontal width direction end) 53 side of the arrester member 5. On this point, it differs from the welded structure C of the third embodiment.

Still further, the welded structure D has a relationship between DBTT vTrs4 (°C) which expresses the toughness of the weld metal forming the small steel plate welded joints 35 and 36 and DBTT vTrs1 (°C) which expresses the base metal toughness of the steel plate 10B made a relationship which satisfies the following formula (7)

$$\mathtt{vTrs4 \leq vTrs1-20...\ (7)}$$

On that point as well, this is made a constitution different from the welded structure C of the third embodiment.

Further, the welded structure D has a brittle crack arrest toughness Kca of the base metal of all of the small steel plates 31 to 34 forming the steel plate 10B of 4000N/mm$^{1.5}$ or more. Further, the welded structure D of the illustrated example has small steel plate welded joints 35 and 36 connected formed into a straight line.

According to the welded structure D, in the same way as the above-mentioned welded structures A to C, even if a brittle crack occurs in the steel plate welded joint 20B, the slanted outer edge 51 (52) of the arrester member 5 or the arrester welded joint 60 which is formed along the slanted outer edge 51 (52) can be used to divert the brittle crack CR to the base metal side of the steel plate 10B (see two-dot chain line arrow in FIG. 8). In the example shown in FIG. 8, a brittle crack CR which occurs at the steel plate welded joint 20A runs from the arrester welded joint 60 of the horizontal width direction end to reach the small steel plate welded joint 35, then enters the small steel plate 32 which is positioned facing the horizontal width direction end and has a brittle crack arrest toughness Kca of 4000N/mm$^{1.5}$ or more and is arrested inside that steel plate.

In this way, a crack which is diverted to the base metal side of the steel plate 10B is immediately arrested at the small steel plate 32 with the high brittle crack arrest toughness Kca, so the steel plate welded joint 20B does not fracture and, further, it becomes possible to prevent large-scale fracture in the welded structure D. Further, the base metal of all of the small steel plates 31 to 34 forming the steel plate 10B of the welded structure D of the present embodiment is more preferably given a brittle crack arrest toughness Kca of 6000N/mm$^{1.5}$ or more.

Below, examples of the welded structure having excellent brittle crack propagation resistance according to the present invention will be given and the present invention will be explained in more detail, but the present invention is of course not limited to the following examples and can be worked while suitably given changes within a range compatible with the surrounding context. These are all included in the technical scope of the present invention.

Example 1

Production of Welded Structure

First, in the production process, molten steel was deoxidized and desulfurized and was adjusted in chemical compositions and then was continuously cast to produce cast ingots of the chemical compositions shown in the following Table 1. Further, under production conditions based on the standards of rolled steel KA32, KA36, and KA40 for hull structures of ClassNK, the cast ingots were reheated and used to roll thick gauge plate to thereby produce steel plates having plate thicknesses of 25 mm to 150 mm in range. Furthermore, these steel plates were subjected to various types of heat treatment. By controlling the conditions at this time, the brittle crack arrest properties Kca (N/mm$^{1.5}$) of the base metals were suitably adjusted to various values. From the produced steel plates, ESSO (brittle crack arrest test) test pieces of a size of 500 mm x 500 mm x plate thickness were suitably taken. These were evaluated and checked for the Kca characteristic at- 10°C. Table 1 shows the Kca values also.

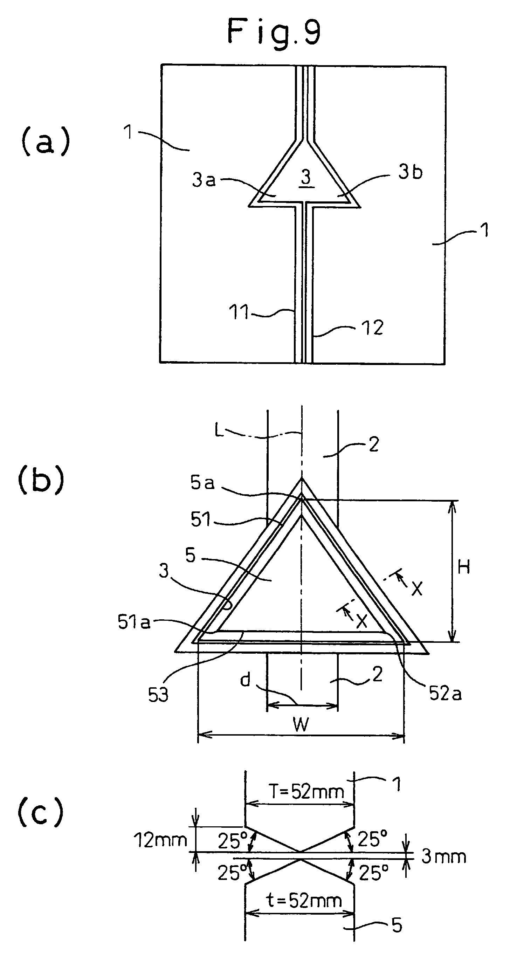

Next, as shown in FIG. 9 (a) and (b), through holes 3a and 3b were formed so as to open at the grooves 11 and 12 of the steel plates 1. Further, the grooves 11 and 12 of the steel plates 1 were butt welded so that the through holes 3a and 3b formed through holes 3 symmetric about the weld line L so as to thereby form steel plate welded joints 2 and thereby join the steel plates 1 together.

Next, an arrester member 5 comprising each steel plate given the chemical compositions shown in the following Table 1 and the steel properties and shape shown in Tables 2 and 4 was inserted into the through hole 3 so as to pass through the steel plates 1. Further, the outer edges 51 and 52 and the outer edge 53 of the arrester member 5 were butt welded to the grooves exposed at the through hole 3 at the steel plates 1 so as to join the arrester member 5 and the steel plates 1. Due to the above procedure, a crack control part 4 comprising an arrester member 5 and arrester welded joints 6 was formed so as to become symmetric at the steel plates 1 about the weld line L of the steel plate welded joint 2.

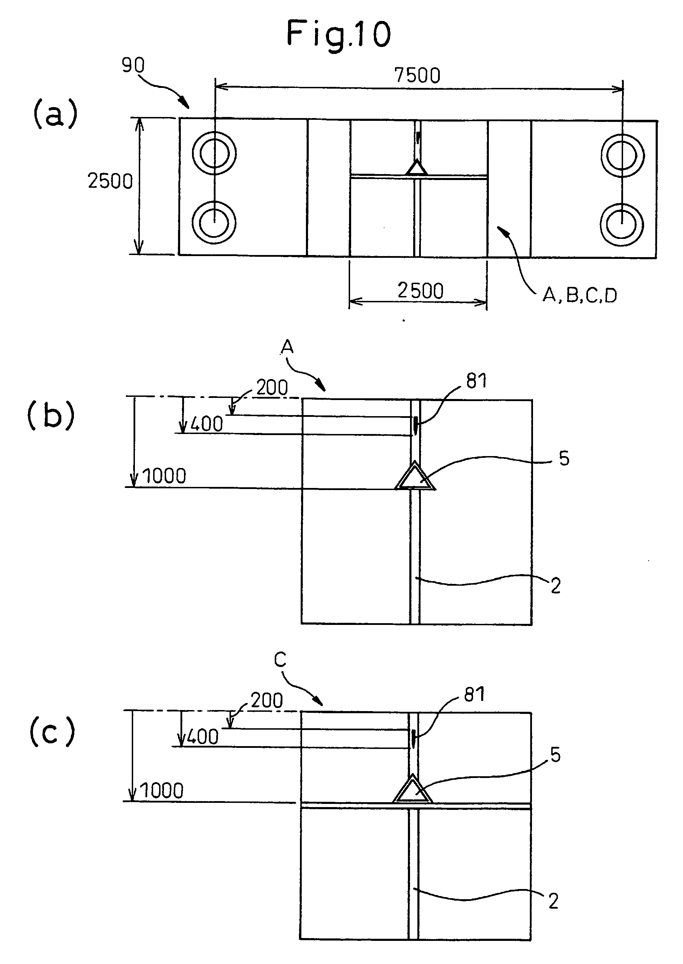

Further, the arrester member 5, as shown in FIGS. 10 (b) and (c), was arranged at a location where the position of the outer edge 53 at the auxiliary countering side became 1000 mm from the top end of the steel plate 1. Further, as shown in FIG. 9 (c), the slanted outer edges 51 and 52 of the arrester member 5 and the outer edge 53 at the auxiliary countering end and also the grooves exposed at the inside of the through hole 3 of the steel plate 1 were beveled so as to become slanted by 130° about the center of the plate thickness direction as the vertex (25° with respect to horizontal line) . Further, grooves at the edges of the arrester member 5 and the grooves of the steel plate 1 exposed inside the through hole 3 were butt welded in a state giving a root gap of about 3 mm at the vertex.

Note that the butt welding of the both steel plates 1 and the butt welding of the steel plates 1 and arrester member 5 in the above procedure were performed by carbon dioxide gas shielded arc welding ($CO_2$ arc welding). As the weld material at that time, weld wire given a high Ni content was used. Further, at the locations of formation of the welded joints, to prevent the formation of origins of new cracks, the welded joints were welded without weld defects. After this, the welded joints were cooled to thereby produce the welded structures (invention examples and comparative examples) as shown in FIG. 3.

Further, in the same way as above, steel plates and arrester members were joined to produce welded structures such as shown in FIG. 6 to FIG. 8 (invention examples and comparative examples).

Further, as an example of the prior art, instead of using an arrester member made of steel plate as the crack control part, the region where the arrester member is to be fit is formed by hole plugging process with weld metal. The method of fabrication is to, first, gouge away about half of the plate thickness from one side of the steel plate welded joint and back fill this with weld metal. Next, from the back side of the steel plate welded joint, a corresponding same region is gouged out in the same way, then back filled with weld metal. The welding work is performed, in the same way as the work on the butt welded parts of the steel plates 1 and arrester member 5, by carbon dioxide gas shielded arc welding ($CO_2$ arc welding). As the welding material, high Ni content weld wire was used.

Evaluation and Tests

The welded structures produced by the above procedure were evaluated and tested in the following way. First, the test apparatus 90 such as shown in FIG. 10(a) was prepared. Samples of the welded structures fabricated by the above procedures were suitably prepared and attached to the test apparatus 90. Here, the window-shaped slit 81 for initiating the crack at the steel plate welded joint 2 shown in FIGS. 10(b) and (c) is used for forcibly initiating a brittle crack by placement of a wedge and application of a predetermined impact stress. A notched front end is formed with a slit of a width of 0.2 mm.

Next, a tensile stress of 262N/mm$^2$ or 300N/mm$^2$ is given in a direction perpendicular to the weld line L of the steel plate welded joint 2, whereby a brittle crack is formed in the steel plate welded joint 2. Further, this brittle crack is made to propagate on the weld line L of the steel plate welded joint 2 so as to evaluate the resistance to brittle crack propagation of the welded structure. The ambient temperature at this time was made -10°C.

Further, the brittle crack which was propagated through the steel plate welded joint 2 reached the arrester welded joint 6 forming the crack control part 4. After this, the direction along which the brittle crack propagated and the arrest location were confirmed. The states of propagation and arrest of the cracks were divided to the [a] to [c] and [e] shown below corresponding to the "a" to "c" and "e" of FIG. 2, and the case where propagation was not arrested was divided into [d1] corresponding to FIG. 2- d and the other [d2] and [d3] . This is shown in the following Tables 3 and 5.

[a]... the brittle crack reaches the arrester welded joint, then advances along the boundary of the steel plate base metal and an arrester welded joint, then is diverted to the base metal side of the steel plate and is immediately arrested at the steel plate (state of FIG. 2-a).

[b]... the brittle crack reaches an arrester welded joint, then enters this arrester welded joint, but after reaching the arrester member, advances along the boundary of the steel plate base metal and an arrester welded joint, then is diverted to the base metal side of the steel plate and is immediately arrested at the steel plate (state of FIG. 2-b).

[c]... the brittle crack reaches an arrester welded joint, then successively enters the arrester welded joint and arrester member, but is arrested inside of the arrester member (state of FIG. 2-c).

[d1]... the brittle crack enters an arrester welded joint and arrester member, then returns to the steel plate welded joint as is and again propagates through the steel plate welded joint (state of FIG. 2-d).

[d2]... if the horizontal width W of the arrester member is small or if the plate thickness "t" of the arrester member is large, the brittle crack propagates along an arrester welded joint without entering the arrester member, jumps from the end of the arrester welded joint in the horizontal width direction to the steel plate welded joint, then again propagates through the steel plate welded joint.

[d3]... after following the route of [a], the crack propagates through the steel plate at the base metal side.

[e]... the brittle crack propagates from the auxiliary countering side and successively enters an arrester welded joint and arrester member, but is arrested inside of the arrester member (state of FIG. 2-e).

Further, regarding the cases of [a] to [c] and [e], the performance in resistance to crack propagation was evaluated by a score (highest value 10) which was calculated based on the distance of propagation of the cracks.

The chemical compositions of each of the steel plates used in the embodiments, the steel plate production conditions, and the brittle crack arrest toughness Kca (N/mm$^{1.5}$) are shown in Table 1, and the properties and shape of the steel plate of each of the arrester members 5, the welding conditions when forming each arrester welded joint 6, the welding conditions when butt welding steel plates 1 to form each steel plate welded joint 2, and the results of evaluation of the propagation of brittle cracks are shown in Tables 2 and 5.

Table 1

| | Steel plate | Chemical compositions (mass%; however, B, Ca, Mg, and REM in ppm) | | | | | | | | | | | | | | | | | Plate thickness T | Brittle crack arrest toughness | | DBTT vTrs 1 |
|---|---|---|---|---|---|---|---|---|---|---|---|---|---|---|---|---|---|---|---|---|---|---|
| | No | C | Si | Mn | P | S | Al | B | Cu | Ni | Cr | Mo | Nb | V | Ti | Zr | Ca | Mg | REM | (mm) | Kca (N/mm$^{1.5}$) | Evaluation temp. (°C) | (°C) |
| Steel plate | P1 | 0.140 | 0.23 | 1.26 | 0.005 | 0.004 | 0.023 | | | | | | 0.01 | | | | | | 20 | 25 | 4200 | -10 | -75 |
| | P2 | 0.110 | 0.23 | 1.45 | 0.005 | 0.004 | 0.023 | | 0.10 | 0.10 | | | 0.02 | | 0.01 | | | | | 50 | 5100 | -10 | -80 |
| | P3 | 0.120 | 0.20 | 1.42 | 0.004 | 0.002 | 0.027 | 10 | | | | | 0.02 | | 0.012 | | | | | 50 | 3900 | -10 | -60 |
| | P4 | 0.120 | 0.20 | 1.52 | 0.004 | 0.002 | 0.027 | 10 | | 0.12 | | | 0.02 | | 0.012 | | | | 8 | 50 | 4200 | -10 | -75 |
| | P5 | 0.070 | 0.23 | 1.18 | 0.007 | 0.003 | 0.013 | 10 | 0.40 | 1.15 | | | 0.01 | | 0.01 | | | | | 60 | 7000 | -10 | -100 |
| | P6 | 0.120 | 0.20 | 1.42 | 0.004 | 0.002 | 0.027 | 10 | 0.10 | 0.10 | | | 0.02 | | 0.012 | | | | | 60 | 2300 | -10 | -50 |
| | P7 | 0.085 | 0.06 | 1.58 | 0.005 | 0.002 | 0.025 | 9 | 0.28 | 0.29 | | | 0.01 | | 0.01 | | 9 | 18 | | 60 | 6300 | -10 | -90 |
| | P8 | 0.090 | 0.05 | 1.62 | 0.008 | 0.003 | 0.031 | 10 | 0.30 | 0.30 | | | 0.012 | 0.039 | 0.01 | | | | | 60 | 6300 | -10 | -90 |
| | P9 | 0.091 | 0.05 | 1.57 | 0.004 | 0.002 | 0.027 | 10 | 0.35 | 0.71 | | | 0.01 | | 0.012 | | 8 | 18 | | 70 | 6300 | -10 | -90 |
| | P10 | 0.120 | 0.20 | 1.42 | 0.004 | 0.002 | 0.027 | 10 | 0.10 | 0.10 | | | 0.02 | | 0.012 | | | | | 70 | 2300 | -10 | -50 |
| | P11 | 0.085 | 0.06 | 1.58 | 0.005 | 0.002 | 0.025 | 9 | 0.28 | 0.29 | | | 0.01 | 0.020 | 0.01 | | 9 | 18 | | 70 | 6200 | -10 | -70 |
| | P12 | 0.095 | 0.15 | 1.41 | 0.005 | 0.002 | 0.025 | 9 | 0.20 | 0.18 | | 0.01 | 0.01 | | 0.01 | | | | | 70 | 4200 | -10 | -75 |
| | P13 | 0.070 | 0.23 | 1.25 | 0.007 | 0.003 | 0.013 | 10 | 0.85 | 1.85 | 0.20 | | 0.01 | 0.050 | 0.01 | | 12 | 25 | | 100 | 7000 | -10 | -100 |
| | P14 | 0.070 | 0.23 | 1.25 | 0.007 | 0.003 | 0.013 | 10 | 0.85 | 1.85 | 0.20 | | 0.01 | 0.050 | 0.01 | | 12 | 25 | | 90 | 7000 | -10 | -90 |
| | P15 | 0.075 | 0.21 | 1.66 | 0.007 | 0.002 | 0.024 | 10 | 0.25 | 1.61 | 0.20 | | 0.01 | 0.050 | 0.01 | | 8 | 22 | | 150 | 6200 | -10 | -75 |
| Arrester member | A1 | 0.060 | 0.23 | 1.45 | 0.005 | 0.004 | 0.023 | | 1.20 | 1.20 | | | 0.01 | | 0.01 | | | | | 25 | 11000 | -10 | -130 |
| | A2 | 0.040 | 0.23 | 1.10 | 0.005 | 0.004 | 0.023 | | 2.50 | 2.50 | | | | | 0.01 | | | | | 50 | 12000 | -10 | -145 |
| | A3 | 0.060 | 0.23 | 1.10 | 0.005 | 0.004 | 0.023 | 5 | 0.60 | 1.20 | | | 0.01 | | 0.01 | | | | | 50 | 7000 | -10 | -100 |
| | A4 | 0.040 | 0.23 | 1.05 | 0.005 | 0.004 | 0.023 | | 1.50 | 2.50 | | | | | 0.01 | | | | | 60 | 7000 | -10 | -100 |
| | A5 | 0.030 | 0.23 | 0.90 | 0.005 | 0.004 | 0.023 | | 0.80 | 3.50 | | | | | 0.01 | | | | | 70 | 7000 | -10 | -100 |

Table 2

Inv. ex.

| Sample No. | Form of welded structure (FIGS. 3, 6, 7, 8) | Steel plate no. (from Table 1) | Plate thickness T (mm) | Heat input (kJ/cm) | Width of weld metal d (mm) | Member symbol (see symbol in FIGS. 3, 6, 7, 8) | Brittle crack arrest toughness of base material part Kca ($N/mm^{-1.5}$) | DBTT of Base material part vTrs1 (°C) | Member symbol (see symbol in FIGS. 3, 6, 7, 8) | Brittle crack arrest toughness of base material part Kca ($N/mm^{-1.5}$) | DBTT of Base material part (bottom region) vTrs1 (°C) | Main countering side angle θ1 (°) | Auxiary countering side angle θ2 (°) | Height H | Width W | Plate thickness t | Sign judgment formula H-1.2t | Ratio H/t | Sign judgment formula W-3.2d | Ratio W/d | Sign judgment formula t-0.75T | Sign judgment formula 1.5 T-t | Steel plate no. (From Table 1) | Brittle crack arrest toughness Kca ($N/mm^{-1.5}$) | DBTT of steel plate vTrs2 (°C) | Sign judgment formula [1] vTrs1 -20 -vTrs2 |
|---|---|---|---|---|---|---|---|---|---|---|---|---|---|---|---|---|---|---|---|---|---|---|---|---|---|---|
| 1 | FIG. 6 | P1 | 25 | 185 | 23 | 10 | 4200 | -75 | - | - | - | 34 | 90 | 450 | 600 | 25 | 420 | 18.0 | 526 | 26.1 | 6.25 | 12.5 | A1 | 11000 | -130 | 35 |
| 2 | FIG. 6 | P1 | 25 | 180 | 23 | 10 | 4200 | -75 | - | - | - | 34 | 90 | 450 | 600 | 25 | 420 | 18.0 | 526 | 26.1 | 6.25 | 12.5 | A1 | 11000 | -130 | 35 |
| 3 | FIG. 6 | P1 | 25 | 180 | 23 | 10 | 4200 | -75 | - | - | - | 50 | 90 | 50 | 120 | 20 (Note 5) | 26 | 2.5 | 46.4 | 5.2 | 1.25 | 17.5 | A1 | 11000 | -130 | 35 |
| 4 | FIG. 6 | P2 | 50 | 320 | 28 | 10 | 5100 | -80 | - | - | - | 27 | 90 | 100 | 100 | 50 | 40 | 2.0 | 10.4 | 3.6 | 12.5 | 25 | A2 | 12000 | -145 | 45 |
| 5 | FIG. 6 | P2 | 50 | 320 | 28 | 10 | 5100 | -80 | - | - | - | 27 | 90 | 100 | 100 | 50 | 40 | 2.0 | 10.4 | 3.6 | 12.5 | 25 | A2 | 12000 | -145 | 45 |
| 6 | FIG. 6 | P2 | 50 | 320 | 28 | 10 | 5100 | -80 | - | - | - | 27 | 90 | 100 | 100 | 50 | 40 | 2.0 | 10.4 | 3.6 | 12.5 | 25 | A2 | 12000 | -145 | 45 |
| 7 | FIG. 6 | P7 | 60 | 380 | 32 | 10 | 6300 | -90 | - | - | - | 34 | 90 | 450 | 600 | 70 | 366 | 6.4 | 498 | 18.8 | 25 | 20 | P5 | 6300 | -90 | -20 |
| 8 | FIG. 6 | P5 | 60 | 520 | 33 | 10 | 7000 | -100 | - | - | - | 45 | 90 | 250 | 500 | 45 (Note 5) | 196 | 5.6 | 394 | 15.2 | 0 | 45 | P5 | 7000 | -100 | -20 |
| 9 | FIG. 6 | P9 | 70 | 460 | 34 | 10 | 6300 | -90 | - | - | - | 45 | 90 | 140 | 280 | 70 | 56 | 2.0 | 171 | 8.2 | 17.5 | 35 | P9 | 6300 | -90 | -20 |
| 10 | FIG. 6 | P12 | 70 | 450 | 34 | 10 | 4200 | -75 | - | - | - | 34 | 90 | 450 | 600 | 70 | 366 | 6.4 | 491 | 17.6 | 17.5 | 35 | A5 | 7000 | -100 | 5 |
| 11 | FIG. 6 | P14 | 90 | 480 (Note 3) | 35 | 10 | 7000 | -90 | - | - | - | 37 | 90 | 300 | 450 | 90 | 192 | 3.3 | 338 | 12.9 | 22.5 | 45 | P14 | 7000 | -90 | -20 |
| 12 | FIG. 6 | P13 | 100 | 550 (Note 3) | 38 | 10 | 7000 | -100 | - | - | - | 45 | 90 | 250 | 500 | 100 | 130 | 2.5 | 378 | 13.2 | 25 | 50 | P13 | 7000 | -100 | -20 |
| 13 | FIG. 6 | P13 | 100 | 550 (Note 3) | 38 | 10 | 7000 | -100 | - | - | - | 45 | 90 | 250 | 500 | 100 | 130 | 2.5 | 378 | 13.2 | 25 | 50 | P13 | 7000 | -100 | -20 |
| 14 | FIG. 6 | P15 | 150 | 430 (Note 4) | 35 | 10 | 6200 | -75 | - | - | - | 34 | 90 | 450 | 600 | 150 | 270 | 3.0 | 488 | 17.1 | 37.5 | 75 | P15 | 6200 | -75 | -20 |
| 15 | FIG. 6 | P15 | 150 | 430 (Note 4) | 35 | 10 | 6200 | -75 | - | - | - | 34 | 90 | 450 | 600 | 150 | 270 | 3.0 | 488 | 17.1 | 37.5 | 75 | P15 | 6200 | -75 | -20 |
| 16 | FIG. 6 | P9 | 70 | 450 | 34 | 10 | 6300 | -90 | - | - | - | 34 | 90 | 450 | 600 | 70 | 366 | 6.4 | 491 | 17.6 | 17.5 | 35 | P9 | 6300 | -90 | -20 |
| 17 | FIG. 6 | P11 | 70 | 430 | 35 | 10 | 6200 | -70 | - | - | - | 34 | 90 | 450 | 600 | 55 (Note 5) | 384 | 8.2 | 488 | 17.1 | 2.5 | 50 | A5 | 7000 | -100 | 10 |
| 18 | FIG. 6 | P15 | 150 | 440 (Note 4) | 35 | 10 | 6200 | -75 | - | - | - | 34 | 90 | 450 | 600 | 140 (Note 6) | 282 | 3.2 | 488 | 17.1 | 27.5 | 85 | A5 | 7000 | -100 | 5 |
| 19 | FIG. 6 | P4 | 50 | 450 | 34 | 10 | 4200 | -75 | - | - | - | 15 | 90 | 450 | 245 | 50 | 390 | 9.0 | 136 | 7.2 | 12.5 | 25 | A3 | 7000 | -100 | 5 |
| 20 | FIG. 6 | P4 | 50 | 450 | 34 | 10 | 4200 | -75 | - | - | - | 50 | 90 | 450 | 1055 | 50 | 390 | 9.0 | 946 | 31.0 | 12.5 | 25 | A3 | 7000 | -100 | 5 |
| 21 | FIG. 6 | P4 | 50 | 450 | 34 | 10 | 4200 | -75 | - | - | - | 20 | 90 | 450 | 320 | 50 | 390 | 9.0 | 211 | 9.4 | 12.5 | 25 | A3 | 7000 | -100 | 5 |
| 22 | FIG. 6 | P4 | 50 | 450 | 34 | 10 | 4200 | -75 | - | - | - | 45 | 90 | 450 | 900 | 50 | 390 | 9.0 | 791 | 26.5 | 12.5 | 25 | A3 | 7000 | -100 | 5 |
| 23 | FIG. 6 | P4 | 50 | 450 | 34 | 10 | 4200 | -75 | - | - | - | 25 | 90 | 450 | 420 | 50 | 390 | 9.0 | 311 | 12.4 | 12.5 | 25 | A3 | 7000 | -100 | 5 |
| 24 | FIG. 6 | P4 | 50 | 450 | 34 | 10 | 4200 | -75 | - | - | - | 40 | 90 | 450 | 750 | 50 | 390 | 9.0 | 641 | 22.1 | 12.5 | 25 | A3 | 7000 | -100 | 5 |
| 25 | FIG. 6 | P4 | 50 | 460 | 35 | 10 | 4200 | -75 | - | - | - | 35 | 70 | 450 | 675 | 50 | 390 | 9.0 | 563 | 19.3 | 12.5 | 25 | A3 | 7000 | -100 | 5 |
| 26 | FIG. 6 | P4 | 50 | 460 | 35 | 10 | 4200 | -75 | - | - | - | 35 | 110 | 450 | 820 | 50 | 390 | 9.0 | 708 | 23.4 | 12.5 | 25 | A3 | 7000 | -100 | 5 |
| 27 | FIG. 6 | P4 | 50 | 330 | 32 | 10 | 4200 | -75 | - | - | - | 39 | 90 | 100 | 160 | 50 | 40 | 2.0 | 57.6 | 5.0 | 12.5 | 25 | A3 | 7000 | -100 | 5 |
| 28 | FIG. 6 | P4 | 50 | 330 | 32 | 10 | 4200 | -75 | - | - | - | 45 | 90 | 100 | 200 | 50 | 40 | 2.0 | 97.6 | 6.3 | 12.5 | 25 | A3 | 7000 | -100 | 5 |
| 29 | FIG. 6 | P4 | 50 | 330 | 32 | 10 | 4200 | -75 | - | - | - | 34 | 90 | 150 | 200 | 50 | 90 | 3.0 | 97.6 | 6.3 | 12.5 | 25 | A3 | 7000 | -100 | 5 |
| 30 | FIG. 6 | P4 | 50 | 330 | 32 | 10 | 4200 | -75 | - | - | - | 24 | 90 | 250 | 225 | 50 | 190 | 5.0 | 123 | 7.0 | 12.5 | 25 | A3 | 7000 | -100 | 5 |
| 31 | FIG. 6 | P4 | 50 | 330 | 32 | 10 | 4200 | -75 | - | - | - | 27 | 90 | 250 | 250 | 50 | 190 | 5.0 | 148 | 7.8 | 12.5 | 25 | A3 | 7000 | -100 | 5 |
| 32 | FIG. 6 | P4 | 50 | 330 | 32 | 10 | 4200 | -75 | - | - | - | 31 | 90 | 250 | 300 | 50 | 190 | 5.0 | 198 | 9.4 | 12.5 | 25 | A3 | 7000 | -100 | 5 |
| 33 | FIG. 6 | P4 | 50 | 330 | 32 | 10 | 4200 | -75 | - | - | - | 27 | 90 | 300 | 300 | 50 | 240 | 6.0 | 198 | 9.4 | 12.5 | 25 | A3 | 7000 | -100 | 5 |
| 34 | FIG. 6 | P4 | 50 | 330 | 32 | 10 | 4200 | -75 | - | - | - | 21 | 90 | 400 | 300 | 50 | 340 | 8.0 | 198 | 9.4 | 12.5 | 25 | A3 | 7000 | -100 | 5 |

Table 3 (Continuation of Table 2)

| Sample no. | Weld conditions and vTrs3 of arrester welded joint | | | | | Welding conditions and vTrs4 of weld metal forming small steel plate welded joint | | | | Results of evaluation of brittle crack arrest property of welded structure | | | | |
|---|---|---|---|---|---|---|---|---|---|---|---|---|---|---|
| | Heat input (kJ/cm) | Width of weld metal (mm) | DBTT vTrs3 (weld metal) (°C) | Sign judgment formula [2] vTrs1-20 -vTrs3 | Sign judgment formula [2'] vTrs3-vTrs1-20 | Heat input (kJ/cm) | Width of weld metal (mm) | DBTT vTrs4 (weld metal) (°C) | Sign judgment formula [4] vTrs1-20 -vTrs4 | Test load stress (N/mm²) | Sign judgment formula [0] vTrs1-vTrs3 | State of advance of brittle crack (see sign of FIG. 2) | Crack arrest performance | Evaluation of score based on crack arrest distance |
| 1 | 26 | 22 | -135 | 40 | -80 | - | - | - | | 262 | 60 | (a) | Crack arrest | 7 |
| 2 | 26 | 22 | -135 | 40 | -80 | - | - | - | | 300 | 60 | (a) | Crack arrest | 5 |
| 3 | 40 | 25 | -70 | -25 | -15 | - | - | - | | 262 | -5 | (c) | Crack arrest | 4 |
| 4 | 25 | 32 | -135 | 35 | -75 | - | - | - | | 262 | 55 | (a) | Crack arrest | 6 |
| 5 | 25 | 32 | -135 | 35 | -75 | - | - | - | | 300 | 55 | (a) | Crack arrest | 8 |
| 6 | 42 | 32 | -75 | -25 | -15 | - | - | - | | 262 | -5 | (c) | Crack arrest | 4 |
| 7 | 26 | 32 | -115 | 5 | -45 | - | - | - | | 262 | 25 | (a) | Crack arrest | 6 |
| 8 | 35 | 45 | -85 | -35 | -5 | - | - | - | | 262 | -15 | (c) | Crack arrest | 4 |
| 9 | 25 | 44 | -110 | 0 | -40 | - | - | - | | 262 | 20 | (a) | Crack arrest | 7 |
| 10 | 25 | 42 | -110 | 15 | -55 | - | - | - | | 262 | 35 | (a) | Crack arrest | 6 |
| 11 | 25 | 46 | -125 | 15 | -55 | - | - | - | | 262 | 35 | (a) | Crack arrest | 7 |
| 12 | 28 | 64 | -130 | 10 | -50 | - | - | - | | 262 | 30 | (a) | Crack arrest | 6 |
| 13 | 28 | 64 | -130 | 10 | -50 | - | - | - | | 300 | 30 | (a) | Crack arrest | 7 |
| 14 | 25 | 76 | -135 | 40 | -80 | - | - | - | | 262 | 60 | (a) | Crack arrest | 5 |
| 15 | 25 | 76 | -135 | 40 | -80 | - | - | - | | 300 | 60 | (a) | Crack arrest | 3 |
| 16 | 25 | 42 | -110 | 0 | -40 | - | - | - | | 262 | 20 | (e) | Crack arrest (enter from bottom) | 6 |
| 17 | 25 | 38 | -105 | 15 | -55 | - | - | - | | 262 | 35 | (c) | Crack arrest | 5 |
| 18 | 25 | 76 | -135 | 40 | -80 | - | - | - | | 262 | 60 | (a) | Crack arrest | 8 |
| 19 | 25 | 42 | -110 | 15 | -55 | - | - | - | | 262 | 35 | (a) | Crack arrest | 5 |
| 20 | 25 | 42 | -105 | 10 | -50 | - | - | - | | 262 | 30 | (a) | Crack arrest | 5 |
| 21 | 25 | 42 | -110 | 15 | -55 | - | - | - | | 262 | 35 | (a) | Crack arrest | 7 |
| 22 | 25 | 42 | -105 | 10 | -50 | - | - | - | | 262 | 30 | (a) | Crack arrest | 7 |
| 23 | 25 | 42 | -110 | 15 | -55 | - | - | - | | 300 | 35 | (a) | Crack arrest | 9 |
| 24 | 25 | 42 | -105 | 10 | -50 | - | - | - | | 300 | 30 | (a) | Crack arrest | 9 |
| 25 | 25 | 42 | -110 | 15 | -55 | - | - | - | | 262 | 35 | (a) | Crack arrest | 5 |
| 26 | 25 | 42 | -115 | 20 | -60 | - | - | - | | 262 | 40 | (a) | Crack arrest | 5 |
| 27 | 25 | 42 | -110 | 15 | -55 | - | - | - | | 262 | 35 | (a) | Crack arrest | 4 |
| 28 | 25 | 42 | -110 | 15 | -55 | - | - | - | | 262 | 35 | (a) | Crack arrest | 5 |
| 29 | 25 | 42 | -110 | 15 | -55 | - | - | - | | 262 | 35 | (a) | Crack arrest | 6 |
| 30 | 25 | 42 | -110 | 15 | -55 | - | - | - | | 262 | 35 | (a) | Crack arrest | 7 |
| 31 | 25 | 42 | -110 | 15 | -55 | - | - | - | | 262 | 35 | (a) | Crack arrest | 7 |
| 32 | 25 | 42 | -115 | 20 | -60 | - | - | - | | 262 | 40 | (a) | Crack arrest | 8 |
| 33 | 25 | 42 | -120 | 25 | -65 | - | - | - | | 262 | 45 | (a) | Crack arrest | 9 |
| 34 | 25 | 42 | -120 | 25 | -65 | - | - | - | | 262 | 45 | (a) | Crack arrest | 10 |

Invention example

Table 4

| Category | Sample No. | Form of welded structure (FIGS. 3, 6, 7, 8) | Steel plate no. (from Table 1) | Plate thickness T (mm) | Heat input (kJ/cm) | Width of weld metal d (mm) | Member symbol (see symbol in FIGS. 3, 6, 7, 8) | Brittle crack arrest toughness of base material part Kca (N/mm$^{1.5}$) | DBTT of Base material part vTrs1 (°C) | Member symbol (see symbol in FIGS. 3, 6, 7, 8) | Brittle crack arrest toughness of base material part Kca (N/mm$^{1.5}$) | DBTT of Base material part (bottom region) vTrs1 (°C) | Main counter-ing side angle θ1 (°) | Auxiary counter-ing side angle θ2 (°) | Dimensions Height H (mm) | Dimensions Width W (mm) | Dimensions Plate thickness t (mm) | Sign judgment formula H-1.2t | Ratio H/t | Sign judgment formula W-3.2d | Ratio W/d | Sign judgment formula t-0.75T | Sign judgment formula 1.5 T-t | Steel plate no. (From Table 1) | Brittle crack arrest toughness Kca (N/mm$^{1.5}$) | DBTT of steel plate vTrs2 (°C) | Sign judgment formula [1] vTrs1 -20 -vTrs2 |
|---|---|---|---|---|---|---|---|---|---|---|---|---|---|---|---|---|---|---|---|---|---|---|---|---|---|---|---|
| Inv. ex. | 35 | FIG. 7 | P10/P12 (Note 2) | 70 | 450 | 34 | 21,23 | 2300 | -50 | 22,24 | 4200 | -75 | 33 | 90 | 210 | 270 | 70 | 126 | 3.0 | 161 | 7.9 | 17.5 | 35 | A5 | 7000 | -100 | 30 |
| | 36 | FIG. 7 | P10/P9 (Note 2) | 70 | 450 | 34 | 21,23 | 2300 | -50 | 22,24 | 6300 | -90 | 33 | 90 | 210 | 270 | 70 | 126 | 3.0 | 161 | 7.9 | 17.5 | 35 | A5 | 7000 | -100 | 30 |
| | 37 | FIG. 7 | P12/P9 (Note 2) | 70 | 450 | 34 | 21,23 | 4200 | -75 | 22,24 | 6300 | -90 | 30 | 90 | 300 | 350 | 70 | 216 | 4.3 | 241 | 10.3 | 17.5 | 35 | A5 | 7000 | -100 | 5 |
| | 38 | FIG. 8 | P7/P8 (Note 2) | 60 | 390 | 32 | 31,33 | 6300 | -90 | 32,34 | 6300 | -90 | 30 | 90 | 300 | 350 | 60 | 228 | 5.0 | 248 | 10.9 | 15 | 30 | A4 | 7000 | -100 | -10 |
| | 39 | FIG. 8 | P7/P8 (Note 2) | 60 | 390 | 32 | 31,33 | 6300 | -90 | 32,34 | 6300 | -90 | 30 | 90 | 300 | 350 | 60 | 228 | 5.0 | 248 | 10.9 | 15 | 30 | A4 | 7000 | -100 | -10 |
| | 40 | FIG. 3 | P3 | 50 | 320 | 28 | 1 (Note 1) | 3900 | -60 | 1A | 4200 | -75 | 34 | 90 | 150 | 200 | 50 | 90 | 3.0 | 110 | 7.1 | 12.5 | 25 | A3 | 7000 | -100 | 20 |
| Comp. ex. | 1 | FIG. 3 | P3 | 50 | 320 | 28 | 1 (Note 1) | 3900 | -60 | 1A | 3900 | -60 | 34 | 90 | 150 | 200 | 50 | 90 | 3.0 | 110 | 7.1 | 12.5 | 25 | A3 | 7000 | -100 | 20 |
| | 2 | FIG. 6 | P2 | 50 | 320 | 28 | 10 | 5100 | -80 | - | - | - | 27 | 90 | 100 | 100 | 50 | 40 | 2.0 | 10.4 | 3.6 | 12.5 | 25 | P4 | 4200 | -75 | -25 |
| | 3 | FIG. 6 | P9 | 70 | 450 | 34 | 10 | 6300 | -90 | - | - | - | 14 | 90 | 450 | 220 | 70 | 366 | 6.4 | 111 | 6.5 | 17.5 | 35 | P9 | 6300 | -90 | -20 |
| | 4 | FIG. 6 | P9 | 70 | 450 | 34 | 10 | 6300 | -90 | - | - | - | 51 | 90 | 450 | 1100 | 70 | 366 | 6.4 | 991 | 32.4 | 17.5 | 35 | P9 | 6300 | -90 | -20 |
| | 5 | FIG. 6 | P9 | 70 | 460 | 35 | 10 | 6300 | -90 | - | - | - | 35 | 69 | 450 | 680 | 70 | 366 | 6.4 | 568 | 19.4 | 17.5 | 35 | P9 | 6300 | -90 | -20 |
| | 6 | FIG. 6 | P9 | 70 | 460 | 35 | 10 | 6300 | -90 | - | - | - | 35 | 112 | 450 | 860 | 70 | 366 | 6.4 | 748 | 24.6 | 17.5 | 35 | P9 | 6300 | -90 | -20 |
| | 7 | FIG. 6 | P4 | 50 | 330 | 32 | 10 | 4200 | -75 | - | - | - | 45 | 90 | 55 | 110 | 50 | -5 | 1.1 | 7.6 | 3.4 | 12.5 | 25 | A3 | 7000 | -100 | 5 |
| | 8 | FIG. 6 | P4 | 50 | 330 | 32 | 10 | 4200 | -75 | - | - | - | 36 | 90 | 70 | 100 | 50 | 10 | 1.4 | -2.4 | 3.1 | 12.5 | 25 | A3 | 7000 | -100 | 5 |
| | 9 | FIG. 6 | P12 | 70 | 460 | 35 | 10 | 4200 | -75 | - | - | - | 34 | 90 | 450 | 600 | 52 (Note 5) | 388 | 8.7 | 488 | 17.1 | -0.5 | 53 | A5 | 7000 | -100 | 5 |
| | 10 | FIG. 6 | P12 | 70 | 460 | 34 | 10 | 4200 | -75 | - | - | - | 35 | 90 | 400 | 550 | 50 (Note 5) | 340 | 8.0 | 441 | 16.2 | -2.5 | 55 | A5 | 7000 | -100 | 5 |
| | 11 | FIG. 6 | P12 | 70 | 460 | 34 | 10 | 4200 | -75 | - | - | - | 35 | 90 | 400 | 550 | 110 (Note 5) | 268 | 3.6 | 441 | 16.2 | 57.5 | -5 | A5 | 7000 | -100 | 5 |
| | 12 | FIG. 6 | P10 | 70 | 550 | 35 | 10 | 2300 | -50 | - | - | - | 66 | 90 | 100 | 450 | 60 (Note 5) | 28 | 1.7 | 338 | 12.9 | 7.5 | 45 | P10 | 2300 | -50 | -20 |
| | 13 | FIG. 6 | P10 | 70 | 550 | 36 | 10 | 2300 | -50 | - | - | - | 11 | 90 | 200 | 80 | 70 | 116 | 2.9 | -35 | 2.2 | 17.5 | 35 | P10 | 2300 | -50 | -20 |
| | 14 | FIG. 7 | P10/P10 (Note 2) | 70 | 450 | 32 | 21,23 | 2300 | -50 | 22,24 | 2300 | -50 | 30 | 90 | 300 | 350 | 70 | 216 | 4.3 | 248 | 10.9 | 17.5 | 35 | A5 | 7000 | -100 | 30 |
| | 15 | FIG. 7 | P11/P9 (Note 2) | 70 | 450 | 32 | 21,23 | 6200 | -70 | 22,24 | 6300 | -90 | 14 | 90 | 300 | 150 | 70 | 216 | 4.3 | 47.6 | 4.7 | 17.5 | 35 | A5 | 7000 | -100 | 10 |
| | 16 | FIG. 7 | P10/P12 (Note 2) | 70 | 450 | 34 | 21,23 | 2300 | -50 | 22,24 | 4200 | -75 | 53 | 90 | 100 | 270 | 70 | 16 | 1.4 | 161 | 7.9 | 17.5 | 35 | P12 | 4200 | -75 | 5 |
| | 17 | FIG. 8 | P6/P7 (Note 2) | 60 | 380 | 30 | 31,33 | 2300 | -50 | 32,34 | 6300 | -90 | 34 | 90 | 150 | 200 | 60 | 78 | 2.5 | 104 | 6.7 | 15 | 30 | A4 | 7000 | -100 | 30 |
| | 18 | Repair weld | P2 | 50 | 320 | 28 | 10 | 5100 | -80 | - | - | - | 27 | 90 | 100 | 100 | 55 | 34 | 1.8 | 10.4 | 3.6 | 17.5 | 20 | - | - | - | -125 | 25 |

Table 5 (Continuation of Table 4)

| | Sample no. | Weld conditions and vTrs3 of arrester welded joint | | | | | Welding conditions and vTrs4 of weld metal forming small steel plate welded joint | | | | Results of evaluation of brittle crack arrest toughness of welded structure | | | | |
|---|---|---|---|---|---|---|---|---|---|---|---|---|---|---|---|
| | | Heat input (kJ/cm) | Width of weld metal (mm) | DBTT vTrs3 (weld metal) (°C) | Sign judgment formula (2) vTrs1-20 -vTrs3 | Sign judgment formula (2') vTrs3- vTrs1-20 | Heat input (kJ/cm) | Width of weld metal (mm) | DBTT vTrs4 (weld metal) (°C) | Sign judgment formula [4] vTrs1-20 -vTrs4 | load stress (N/mm²) | Sign judgment formula [0] vTrs1- vTrs3 | State of advance of brittle crack (see sign of FIG. 2) | Crack arrest performance | Evaluation of score based on crack arrest distance |
| Inv. ex. | 35 | 30 | 45 | -100 | 30 | -70 | 30 | 45 | -105 | 35 | 262 | 50 | (a) | Crack arrest | 6 |
| | 36 | 25 | 39 | -125 | 55 | -95 | 35 | 45 | -90 | 20 | 262 | 75 | (a) | Crack arrest | 9 |
| | 37 | 26.5 | 39 | -130 | 35 | -75 | 30 | 45 | -135 | 40 | 262 | 55 | (a) | Crack arrest | 5 |
| | 38 | 30 | 37 | -120 | 10 | -50 | 30 | 36 | -135 | 25 | 262 | 30 | (a) | Crack arrest | 7 |
| | 39 | 30 | 37 | -120 | 10 | -50 | 35 | 42 | -110 | 0 | 262 | 30 | (a) | Crack arrest | 5 |
| | 40 | 25 | 32 | -140 | 60 | -100 | - | - | - | - | 262 | 80 | (a) | Crack arrest | 7 |
| Comp. ex. | 1 | 25 | 32 | -135 | 55 | -95 | - | - | - | - | 262 | 75 | (d3) | No crack arrest | F (Note 7) |
| | 2 | 25 | 32 | -135 | 35 | -75 | - | - | - | | 262 | 55 | (d1) | No crack arrest | F |
| | 3 | 25 | 42 | -110 | 0 | -40 | - | - | - | | 262 | 20 | (d2) | No crack arrest | F |
| | 4 | 25 | 42 | -110 | 0 | -40 | - | - | - | | 262 | 20 | (d1) | No crack arrest | F |
| | 5 | 25 | 42 | -110 | 0 | -40 | - | - | - | | 262 | 20 | (d2) | No crack arrest | F |
| | 6 | 25 | 42 | -110 | 0 | -40 | - | - | - | | 262 | 20 | (d1) | No crack arrest | F |
| | 7 | 25 | 42 | -110 | 15 | -55 | - | - | - | | 262 | 35 | (d1) | No crack arrest | F |
| | 8 | 25 | 42 | -110 | 15 | -55 | - | - | - | | 262 | 35 | (d1) | No crack arrest | F |
| | 9 | 45 | 42 | -70 | -25 | -15 | - | - | - | | 262 | -5 | (d1) | No crack arrest | F |
| | 10 | 25 | 42 | -110 | 15 | -55 | - | - | - | | 262 | 35 | (d1) | No crack arrest | F |
| | 11 | 25 | 42 | -110 | 15 | -55 | - | - | - | | 262 | 35 | (d2) | No crack arrest | F |
| | 12 | 28 | 45 | -110 | 40 | -80 | - | - | - | | 262 | 60 | (d1) | No crack arrest | F |
| | 13 | 25 | 45 | -135 | 65 | -105 | - | - | - | | 262 | 85 | (d2) | No crack arrest | F |
| | 14 | 25.5 | 40 | -125 | 55 | -95 | 30 | 45 | -80 | 10 | 262 | 75 | (d3) | No crack arrest | F |
| | 15 | 25.5 | 40 | -140 | 50 | -90 | 30 | 45 | -105 | 15 | 262 | 70 | (d2) | No crack arrest | F |
| | 16 | 30 | 38 | -95 | 25 | -65 | 30 | 45 | -80 | 10 | 262 | 45 | (d1) | No crack arrest | F |
| | 17 | 30 | 35 | -120 | 50 | -90 | 50 | 36 | -60 | -10 | 262 | 70 | (d2) | No crack arrest | F |
| | 18 | 30 | 32 | -95 | -5 | -35 | - | - | - | - | 300 | 15 | (d1) | No crack arrest | F |

Note 7: Symbol F means total fracture of joint test piece.

Note that, in Tables 2 and 4, the contents of notes 1 to 6 are as follows:

Note 1: Means region other than region 1A in steel plate 1.
Note 2: Means combination of two types of steel plates based on the figures.
Note 3: Butt welding X-groove dividing plate thickness to 4:1 from two surfaces of steel plate by electro gas arc welding. Shows the larger amount of heat input applied at that time.
Note 4: Butt welding half of the plate thickness at a time from the two surfaces of the steel plate by electro gas arc welding. Shows the heat input at that time.
Note 5: Machine cutting to remove equal thicknesses from both front and back surface of material steel plate to fabricate steel plate reduced in plate thickness.
Note 6: Superposing two arrester members of plate thicknesses of 70 mm to form crack control part.

Results of Evaluation

Invention Examples 1 to 34 which are shown in Tables 2 and 3 are examples relating to the welded structure B of the second embodiment of the present invention shown in FIG. 6. Invention Examples 35 to 37 which are shown in Tables 4 and 5 are examples relating to the welded structure C of the third embodiment of the present invention shown in FIG. 7, Invention Examples 38 and 39 are examples relating to the welded structure D of the fourth embodiment shown in FIG. 8, and Invention Example 40 is an example relating to the welded structure A of the first embodiment shown in FIG. 3.
Further, Comparative Examples 1 and 19 which are shown in Tables 4 and 5 are comparative examples having similar structures to the welded structure A, Comparative Examples 2 to 14 is a comparative example having a similar structure to the welded structure B, Comparative Example 15 to 18 is a comparative example having a similar structure to the welded structure C, Comparative Example 20 is a comparative example having a similar structure to the welded structure D, and Comparative Example 21 is an example of the prior art by repair weld.
As shown in Tables 2 to 5, the welded structures according to the present invention (Invention Examples 1 to 34) had states of propagation of brittle cracks of one of [a] to [c] and [e]. Due to this, in the welded structures of the present invention, even when a brittle crack occurred in the welded joint, it was possible to keep the crack from propagating through the welded joint or base metal and possible to prevent fracture of the welded structure. It could be confirmed that the present invention is superior in brittle crack arrest toughness.
As opposed to this, the welded structures of Comparative Examples 1 to 18 are examples where one of the base metal properties of the steel plate or steel plate properties or shape of the arrester member does not satisfy the provisions of the present invention, so advance of a brittle crack cannot be arrested.
The welded structures of Comparative Example 1 and Comparative Example 14 are examples where the brittle crack arrest toughness (Kcal) of the regions of 1A and 22 and 24 of the steel plate base metal is unsuitable and a crack entering one of the regions cannot be arrested.
The welded structure of Comparative Example 2 is an example where the vTrs3 of the weld metal of the arrester welded joint is of a somewhat insufficient level, a crack enters the arrester member, but the Kca value of the arrester member is also unsuitable, and the entering crack cannot be arrested.
The welded structure of Comparative Example 3 is an example where the angle $\theta 1$ of the arrester member is excessively small and therefore unsuitable. While a crack can be diverted along the outer edge of the brittle crack countering side, after that it ends up propagating along the extension of the crack auxiliary countering side and leads to fracture.
The welded structure of Comparative Example 4 is an example where the angle $\theta 1$ of the arrester member is excessively large and therefore unsuitable. The direction of advance inherently cannot be controlled to divert the crack to the steel plate base metal side, and a brittle crack occurring at the steel plate welded joint proceeds straight as is and leads to fracture.
The welded structure of Comparative Example 5 has an angle $\theta 2$ of the arrester member which is excessively small and therefore unsuitable. While the crack can be diverted along the outer edge of the brittle crack countering side, it then ends up propagating along the extension of the crack auxiliary countering side and leads to fracture.
The welded structure of Comparative Example 6 is an example where the angle $\theta 2$ of the arrester member is excessively large and therefore unsuitable. The direction of advance cannot be controlled, and a brittle crack which occurs at the steel plate welded joint proceeds straight as is and leads to fracture.
The welded structure of Comparative Example 7 is an example where the vTrs3 of the weld metal of the arrester welded joint is insufficient and where the height H of the arrester member is excessively small and therefore unsuitable, so the arrester member cannot arrest a crack.
The welded structure of Comparative Example 8 is an example where the horizontal width W of the arrester member is excessively small and therefore unsuitable. While a crack can be diverted along the outer edge of the brittle crack countering side, it then ends up being propagated along the extension of the crack auxiliary countering side and leads to fracture.

The welded structure of Comparative Example 9 is an example where the vTrs3 of the weld metal of the arrester welded joint is insufficient, a crack enters the arrester  member, but the plate thickness "t" of the arrester member is excessively small and therefore unsuitable, so the arrester member cannot arrest the crack.

The welded structure of Comparative Example 10 is an example where the plate thickness "t" of the arrester member is excessively small and therefore unsuitable, the arrester member substantially loses the ability to divert a crack to the steel plate base metal side, so the direction of advance cannot be controlled, and a brittle crack which occurs at the steel plate welded joint proceeds as is and leads to fracture.

The welded structure of Comparative Example 11 is an example where, due to the effect of stress concentration at the weld metal toe of an arrester welded joint, a brittle crack propagates along the boundary of the arrester welded joint and the steel plate welded joint, bypasses the outer edge of the brittle crack auxiliary countering side, and as a result again enters the steel plate welded joint and leads to fracture.

The welded structure of Comparative Example 12 is one where the angle $\theta1$ of the arrester member is even smaller than Comparative Example 3 and a crack can be diverted along the outer edge of the brittle crack countering side, but ends up propagating along the extension of the crack auxiliary countering side and leads to fracture.

The welded structure of Comparative Example 13 is an example where the angle $\theta1$ of the outer edge of the arrester member exceeds 50° with respect to the longitudinal direction of the steel plate welded joint, even more than Comparative Example 4, the direction of advance inherently cannot be controlled, and, further, the Kca value of the arrester member is insufficient, so a brittle crack which occurs enters into the arrester member, then proceeds straight as is and leads to fracture.

The welded structure of Comparative Example 15 is an example where, like Comparative Example 3, the angle $\theta1$ of the arrester member is excessively small and therefore unsuitable. While a crack can be diverted along the outer edge of the brittle crack countering side, it then ends up propagating along the crack auxiliary countering side and leads to fracture.

The welded structure of Comparative Example 16, like Comparative Example 4, has an angle $\theta1$ of the arrester member over the suitable range. The direction of advance inherently cannot be controlled so as to divert a crack to the steel plate base metal side. A brittle crack which occurs at the steel plate welded joint proceeds straight as is and leads to fracture.

The welded structure of Comparative Example 17 is an example where the vTrs of the weld metal of a small steel plate welded joint is insufficient. A brittle crack which occurs can be diverted along the outer edge of the brittle crack countering side, but then is propagated along the weld metal of the small steel plate welded joint and leads to fracture.

The welded structure of Comparative Example 18 is one based on a repair weld. The shape of the repair weld zone is made a shape similar to Invention Example 4, but the advance of a brittle crack cannot be arrested.

Example 2

Example 2 is an example of the case where the brittle crack enters an arrester welded joint.

Production of Welded Structure

In the same way as Example 1, steel plates having the chemical compositions shown in Table 1 and the plate thicknesses and properties shown in Tables 6 and 8 were fabricated. Next, arrester members 5 comprising steel plates of the chemical compositions shown in Table 1 and the steel properties and shapes shown in Tables 6 and 8  were prepared. Using the welding conditions shown in Tables 6 and 8, by a method similar to Example 1, two steel plates were butt welded and the steel plates and each arrester member were butt welded. By the above procedure, welded structures having the joint properties shown in Tables 7 and 9 and the configurations shown in FIG. 3 and FIG. 6 to FIG. 8 (invention examples and comparative examples) were prepared.

Evaluation and Tests and Evaluation Results

The welded structures produced by the above procedure were evaluated and tested in the same way as with Example 1. The direction of propagation of a brittle crack and arrest position were confirmed, then in the same way as Example 1, the states of propagation and arrest of a crack were divided to the "b", "c", and "e", and the case where propagation was not arrested was divided into [d1] to [d3]. This is shown in the following Tables 7 and 9.

Further, regarding the cases of [a] to [c] and [e], the performance in resistance to crack propagation was evaluated by a score (highest value 10) which was calculated based on the distance of propagation of the cracks. The results of evaluation are shown in Tables 7 and 9.

Table 6

| Sample No. | Form of welded structure (FIGS. 3, 6, 7, 8) | Steel plate no. (from Table 1) | Plate thickness T (mm) | Heat input (kJ/cm) | Width of weld metal d (mm) | Member symbol (see symbol in FIGS. 3, 6, 7, 8) | Brittle crack arrest toughness of base material part Kca (N/mm^1.5) | DBTT of Base material part vTrs1 (°C) | Member symbol (see symbol in FIGS. 3, 6, 7, 8) | Brittle crack arrest toughness of base material part Kca (N/mm^1.5) | DBTT of Base material part (bottom region) vTrs1 (°C) | Main counter-ing side angle θ1 (°) | Auxiary countering side angle θ2 (°) | Height H | Width W | Plate thickness t | Sign judgment formula H-1.2t | Ratio H/t | Sign judgment formula W-3.2d | Ratio W/d | Sign judgment formula t-0.75T | Sign judgment formula 1.5 T-t | Steel plate no. (From Table 1) | Brittle crack arrest toughness Kca (N/mm^1.5) | DBTT of steel plate vTrs2 (°C) | Sign judgment formula (1) vTrs1 -20 -vTrs2 |
|---|---|---|---|---|---|---|---|---|---|---|---|---|---|---|---|---|---|---|---|---|---|---|---|---|---|---|
| 1 | FIG. 6 | P1 | 25 | 185 | 23 | 10 | 4200 | -75 | - | - | - | 34 | 90 | 450 | 600 | 25 | 420 | 18.0 | 526 | 26.1 | 6.25 | 12.5 | A1 | 11000 | -130 | 35 |
| 2 | FIG. 6 | P1 | 25 | 182 | 23 | 10 | 4200 | -75 | - | - | - | 50 | 90 | 50 | 120 | 20 (Note | 26 | 2.5 | 46.4 | 5.2 | 1.25 | 17.5 | A1 | 11000 | -130 | 35 |
| 3 | FIG. 6 | P2 | 50 | 325 | 28 | 10 | 5100 | -80 | - | - | - | 27 | 90 | 100 | 100 | 50 | 40 | 2.0 | 10.4 | 3.6 | 12.5 | 25 | A2 | 12000 | -145 | 45 |
| 4 | FIG. 6 | P2 | 50 | 325 | 28 | 10 | 5100 | -80 | - | - | - | 27 | 90 | 100 | 100 | 50 | 40 | 2.0 | 10.4 | 3.6 | 12.5 | 25 | A2 | 12000 | -145 | 45 |
| 5 | FIG. 6 | P7 | 60 | 380 | 32 | 10 | 6300 | -90 | - | - | - | 34 | 90 | 450 | 600 | 70 | 366 | 6.4 | 498 | 18.8 | 25 | 20 | P5 | 6300 | -90 | -20 |
| 6 | FIG. 6 | P12 | 70 | 450 | 34 | 10 | 4200 | -75 | - | - | - | 34 | 90 | 450 | 600 | 70 | 366 | 6.4 | 491 | 17.6 | 17.5 | 35 | A5 | 7000 | -100 | 5 |
| 7 | FIG. 6 | P14 | 90 | 480 (Note 3) | 35 | 10 | 7000 | -90 | - | - | - | 37 | 90 | 300 | 450 | 90 | 192 | 3.3 | 338 | 12.9 | 22.5 | 45 | P14 | 7000 | -90 | -20 |
| 8 | FIG. 6 | P13 | 100 | 550 (Note 3) | 42 | 10 | 7000 | -100 | - | - | - | 45 | 90 | 250 | 500 | 100 | 130 | 2.5 | 366 | 11.9 | 25 | 50 | P13 | 7000 | -100 | -20 |
| 9 | FIG. 6 | P15 | 150 | 430 (Note 4) | 35 | 10 | 6200 | -75 | - | - | - | 34 | 90 | 450 | 600 | 150 | 270 | 3.0 | 488 | 17.1 | 37.5 | 75 | P15 | 6200 | -75 | -20 |
| 10 | FIG. 6 | P9 | 70 | 450 | 34 | 10 | 6300 | -90 | - | - | - | 34 | 90 | 450 | 600 | 70 | 366 | 6.4 | 491 | 17.6 | 17.5 | 35 | P9 | 6300 | -90 | -20 |
| 11 | FIG. 6 | P15 | 150 | 440 (Note 4) | 35 | 10 | 6200 | -75 | - | - | - | 34 | 90 | 450 | 600 | 140 (Note | 282 | 3.2 | 488 | 17.1 | 27.5 | 85 | A5 | 7000 | -100 | 5 |
| 12 | FIG. 6 | P4 | 50 | 450 | 34 | 10 | 4200 | -75 | - | - | - | 15 | 90 | 250 | 135 | 50 | 190 | 5.0 | 26 | 4.0 | 12.5 | 25 | A3 | 7000 | -100 | 5 |
| 13 | FIG. 6 | P4 | 50 | 450 | 34 | 10 | 4200 | -75 | - | - | - | 50 | 90 | 250 | 600 | 50 | 190 | 5.0 | 491 | 17.6 | 12.5 | 25 | A3 | 7000 | -100 | 5 |
| 14 | FIG. 6 | P4 | 50 | 450 | 34 | 10 | 4200 | -75 | - | - | - | 25 | 90 | 450 | 420 | 50 | 390 | 9.0 | 311 | 12.4 | 12.5 | 25 | A3 | 7000 | -100 | 5 |
| 15 | FIG. 6 | P4 | 50 | 450 | 34 | 10 | 4200 | -75 | - | - | - | 40 | 90 | 450 | 750 | 50 | 390 | 9.0 | 641 | 22.1 | 12.5 | 25 | A3 | 7000 | -100 | 5 |
| 16 | FIG. 6 | P4 | 50 | 460 | 35 | 10 | 4200 | -75 | - | - | - | 35 | 70 | 450 | 675 | 50 | 390 | 9.0 | 563 | 19.3 | 12.5 | 25 | A3 | 7000 | -100 | 5 |
| 17 | FIG. 6 | P4 | 50 | 460 | 35 | 10 | 4200 | -75 | - | - | - | 35 | 110 | 450 | 820 | 50 | 390 | 9.0 | 708 | 23.4 | 12.5 | 25 | A3 | 7000 | -100 | 5 |
| 18 | FIG. 6 | P4 | 50 | 330 | 32 | 10 | 4200 | -75 | - | - | - | 39 | 90 | 100 | 160 | 50 | 40 | 2.0 | 57.6 | 5.0 | 12.5 | 25 | A3 | 7000 | -100 | 5 |
| 19 | FIG. 6 | P4 | 50 | 330 | 32 | 10 | 4200 | -75 | - | - | - | 45 | 90 | 100 | 200 | 50 | 40 | 2.0 | 97.6 | 6.3 | 12.5 | 25 | A3 | 7000 | -100 | 5 |
| 20 | FIG. 6 | P4 | 50 | 330 | 32 | 10 | 4200 | -75 | - | - | - | 34 | 90 | 150 | 200 | 50 | 90 | 3.0 | 97.6 | 6.3 | 12.5 | 25 | A3 | 7000 | -100 | 5 |
| 21 | FIG. 6 | P4 | 50 | 330 | 32 | 10 | 4200 | -75 | - | - | - | 24 | 90 | 250 | 225 | 50 | 190 | 5.0 | 123 | 7.0 | 12.5 | 25 | A3 | 7000 | -100 | 5 |
| 22 | FIG. 6 | P4 | 50 | 330 | 32 | 10 | 4200 | -75 | - | - | - | 27 | 90 | 250 | 250 | 50 | 190 | 5.0 | 148 | 7.0 | 12.5 | 25 | A3 | 7000 | -100 | 5 |
| 23 | FIG. 6 | P4 | 50 | 330 | 32 | 10 | 4200 | -75 | - | - | - | 31 | 90 | 250 | 300 | 50 | 190 | 5.0 | 198 | 9.4 | 12.5 | 25 | A3 | 7000 | -100 | 5 |
| 24 | FIG. 6 | P4 | 50 | 330 | 32 | 10 | 4200 | -75 | - | - | - | 27 | 90 | 300 | 300 | 50 | 240 | 6.0 | 198 | 9.4 | 12.5 | 25 | A3 | 7000 | -100 | 5 |
| 25 | FIG. 6 | P4 | 50 | 330 | 32 | 10 | 4200 | -75 | - | - | - | 21 | 90 | 400 | 300 | 50 | 340 | 8.0 | 198 | 9.4 | 12.5 | 25 | A3 | 7000 | -100 | 5 |

Inv. ex.

Table 7 (Continuation of Table 6)

| | Sample no. | Weld conditions and vTrs3 of arrester welded joint | | | | Welding conditions and vTrs4 of weld metal forming small steel plate welded joint | | | | Results of evaluation of brittle crack arrest property of welded structure | | | | |
|---|---|---|---|---|---|---|---|---|---|---|---|---|---|---|
| | | Heat input (kJ/cm) | Width of weld metal (mm) | DBTT vTrs3 (weld metal) (°C) | Sign judgment formula [2'] vTrs3-vTrs1-20 | Heat input kJ/cm | Width of weld metal (mm) | DBTT vTrs4 (weld metal) (°C) | Sign judgment formula [4] vTrs1-20-vTrs4 | Load stress (N/mm²) | Sign Judgment formula [0] vTrs1-vTrs3 | State of advance of brittle crack (see sign of FIG. 2) | Crack arrest performance | Evaluation of score based on crack arrest distance |
| Invention example | 1 | 46 | 22 | -50 | 5 | - | - | | | 262 | -25 | (b) | Crack arrest | 6 |
| | 2 | 45 | 25 | -50 | 5 | - | - | | | 262 | -25 | (c) | Crack arrest | 3 |
| | 3 | 50 | 32 | -50 | 10 | - | - | | | 262 | -30 | (b) | Crack arrest | 6 |
| | 4 | 55 | 32 | -35 | 25 | - | - | | | 262 | -45 | (c) | Crack arrest | 4 |
| | 5 | 40 | 32 | -65 | 5 | - | - | | | 262 | -25 | (b) | Crack arrest | 6 |
| | 6 | 25 | 48 | -50 | 5 | - | - | | | 262 | -25 | (b) | Crack arrest | 6 |
| | 7 | 25 | 50 | -50 | 20 | - | - | | | 262 | -40 | (b) | Crack arrest | 6 |
| | 8 | 27 | 30 | -80 | 0 | - | - | | | 262 | -20 | (b) | Crack arrest | 5 |
| | 9 | 36 | 76 | -50 | 5 | - | - | | | 262 | -25 | (b) | Crack arrest | 5 |
| | 10 | 36 | 42 | -55 | 15 | - | - | | | 300 | -35 | (e) | Crack arrest (Entered from bottom) | 6 |
| | 11 | 36 | 76 | -50 | 5 | - | - | | | 262 | -25 | (b) | Crack arrest | 6 |
| | 12 | 45 | 38 | -40 | 15 | - | - | | | 262 | -35 | (b) | Crack arrest | 4 |
| | 13 | 45 | 38 | -45 | 10 | - | - | | | 262 | -30 | (b) | Crack arrest | 4 |
| | 14 | 36 | 38 | -50 | 5 | - | - | | | 300 | -25 | (b) | Crack arrest | 6 |
| | 15 | 36 | 38 | -50 | 5 | - | - | | | 300 | -25 | (b) | Crack arrest | 6 |
| | 16 | 45 | 38 | -45 | 10 | - | - | | | 262 | -30 | (b) | Crack arrest | 3 |
| | 17 | 45 | 38 | -45 | 10 | - | - | | | 262 | -30 | (c) | Crack arrest | 2 |
| | 18 | 42 | 38 | -50 | 5 | - | - | | | 262 | -25 | (b) | Crack arrest | 3 |
| | 19 | 42 | 38 | -50 | 5 | - | - | | | 262 | -25 | (b) | Crack arrest | 4 |
| | 20 | 42 | 38 | -50 | 5 | - | - | | | 262 | -25 | (b) | Crack arrest | 5 |
| | 21 | 42 | 38 | -50 | 5 | - | - | | | 262 | -25 | (b) | Crack arrest | 6 |
| | 22 | 42 | 38 | -50 | 5 | - | - | | | 262 | -25 | (b) | Crack arrest | 6 |
| | 23 | 42 | 38 | -50 | 5 | - | - | | | 262 | -25 | (b) | Crack arrest | 7 |
| | 24 | 42 | 38 | -50 | 5 | - | - | | | 262 | -25 | (b) | Crack arrest | 8 |
| | 25 | 42 | 38 | -50 | 5 | - | - | | | 300 | -25 | (b) | Crack arrest | 9 |

Table 8

| Sample No. | Form of welded structure FIGS. 3, 7, 8 | Steel plate no. (from Table 1) | Plate thickness T (mm) | Heat input (kJ/cm) | Width of weld metal d (mm) | Member symbol (see symbol in FIGS. 3, 6, 7, 8) | Crack arrest toughness of base material part Kca (N/mm^1.5) | DBTT of Base material 1 part vTrs1 (°C) | Member symbol (see symbol in FIGS. 3, 6, 7, 8) | Brittle crack arrest toughness of base material 1 part Kca (N/mm^1.5) | DBTT of Base material 1 part (bottom region) vTrs1 (°C) | Main countersing side angle θ1 (°) | Auxiary countersing side angle θ2 (°) | Height H (mm) | Width W (mm) | Plate thickness t (mm) | Sign judgment formula H-1.2t | Ratio H/t | Sign judgment formula W-3.2d | Ratio W/d | Sign judgment formula t-0.75T | Sign judgment formula 1.5T-t | Steel plate no. (from Table 1) | Brittle crack arrest toughness s Kca (N/mm^1.5) | DBTT of steel plate vTrs2 (°C) | Sign judgment formula (1) vTrs1 -20 vTrs2 -20 -vTrs2 | |
|---|---|---|---|---|---|---|---|---|---|---|---|---|---|---|---|---|---|---|---|---|---|---|---|---|---|---|---|
| 26 | FIG. 7 | P12/P9 (Note 2) | 70 | 450 | 34 | 21,23 | 4200 | -75 | 22,24 | 6300 | -90 | 30 | 90 | 300 | 350 | 70 | 216 | 4.3 | 241 | 10.3 | 17.5 | 35 | A5 | 7000 | -100 | 5 | Inv. ex. |
| 27 | FIG. 8 | P7/P8 (Note 2) | 60 | 390 | 32 | 31,33 | 6300 | -90 | 32,34 | 6300 | -90 | 30 | 90 | 300 | 350 | 60 | 228 | 5.0 | 248 | 10.9 | 15 | 30 | A4 | 7000 | -100 | -10 | |
| 28 | FIG. 8 | P7/P8 (Note 2) | 60 | 390 | 32 | 31,33 | 6300 | -90 | 32,34 | 6300 | -90 | 30 | 90 | 300 | 350 | 60 | 228 | 5.0 | 248 | 10.9 | 15 | 30 | P7 | 6300 | -90 | -20 | |
| 29 | FIG. 3 | P3 | 50 | 320 | 28 | 1 (Note 1) | 3900 | -60 | 1A | 4200 | -75 | 34 | 90 | 150 | 200 | 50 | 90 | 3.0 | 110 | 7.1 | 12.5 | 25 | A3 | 7000 | -100 | 20 | |
| 1 | FIG. 3 | P3 | 50 | 320 | 28 | 1 (Note 1) | 3900 | -60 | 1A | 3900 | -60 | 34 | 90 | 150 | 200 | 50 | 90 | 3.0 | 110 | 7.1 | 12.5 | 25 | A3 | 7000 | -100 | 20 | Comp. ex. |
| 2 | FIG. 6 | P2 | 50 | 320 | 28 | 10 | 5100 | -80 | - | - | - | 27 | 90 | 100 | 100 | 50 | 40 | 2.0 | 10.4 | 3.6 | 12.5 | 25 | P4 | 4200 | -75 | -25 | |
| 3 | FIG. 6 | P4 | 50 | 430 | 34 | 10 | 4200 | -75 | - | - | - | 13 | 90 | 250 | 120 | 50 | 190 | 5.0 | 11.2 | 3.5 | 12.5 | 25 | A3 | 7000 | -100 | 5 | |
| 4 | FIG. 6 | P4 | 50 | 430 | 34 | 10 | 4200 | -75 | - | - | - | 35 | 69 | 450 | 680 | 50 | 390 | 9.0 | 571 | 20.0 | 12.5 | 25 | A3 | 7000 | -100 | 5 | |
| 5 | FIG. 6 | P4 | 50 | 330 | 32 | 10 | 4200 | -75 | - | - | - | 35 | 112 | 450 | 860 | 50 | 390 | 9.0 | 751 | 25.3 | 12.5 | 25 | P4 | 4200 | -75 | -20 | |
| 6 | FIG. 6 | P9 | 70 | 460 | 34 | 10 | 6300 | -90 | - | - | - | 45 | 90 | 55 | 110 | 50 | -5 | 1.1 | 7.6 | 3.4 | 12.5 | 35 | A3 | 7000 | -100 | 5 | |
| 7 | FIG. 6 | P4 | 50 | 450 | 34 | 10 | 4200 | -75 | - | - | - | 55 | 90 | 70 | 200 | 70 | -14 | 1.0 | 91.2 | 5.9 | 17.5 | 35 | P9 | 6300 | -90 | -20 | |
| 8 | FIG. 6 | P4 | 50 | 450 | 34 | 10 | 4200 | -75 | - | - | - | 65 | 90 | 350 | 1500 | 50 | 290 | 7.0 | 1391.2 | 44.1 | 12.5 | 25 | P4 | 4200 | -75 | -20 | |
| 9 | FIG. 6 | P4 | 50 | 330 | 32 | 10 | 4200 | -75 | - | - | - | 36 | 90 | 70 | 100 | 50 | 10 | 1.4 | -2.4 | 3.1 | 12.5 | 25 | A5 | 7000 | -100 | 5 | |
| 10 | FIG. 6 | P12 | 70 | 460 | 34 | 10 | 4200 | -75 | - | - | - | 35 | 90 | 400 | 550 | 50 (Note 5) | 340 | 8.0 | 441.2 | 16.2 | -2.5 | 55 | P6 | 2300 | -50 | -45 | |
| 11 | FIG. 6 | P4 | 50 | 460 | 35 | 10 | 4200 | -75 | - | - | - | 34 | 90 | 450 | 600 | 40 (Note 5) | 402 | 11.3 | 488 | 17.1 | 2.5 | 35 | P13 | 7000 | -100 | -20 | |
| 12 | FIG. 6 | P13 | 100 | 550 | 42 | 10 | 7000 | -100 | - | - | - | 45 | 90 | 250 | 500 | 60 (Note 5) | 178 | 4.2 | 365.6 | 11.9 | -15 | 90 | P12 | 7000 | -100 | -20 | |
| 13 | FIG. 6 | P12 | 70 | 460 | 34 | 10 | 4200 | -75 | - | - | - | 35 | 90 | 400 | 550 | 110 (Note 5) | 268 | 3.6 | 441.2 | 16.2 | 57.5 | -5 | P12 | 4200 | -75 | -20 | |
| 14 | FIG. 7 | P12/P10 (Note 2) | 70 | 450 | 34 | 21,23 | 4200 | -75 | 22,24 | 2300 | -50 | 34 | 90 | 200 | 270 | 70 | 116 | 2.9 | 161.2 | 7.9 | 17.5 | 35 | P9 | 6300 | -90 | -5 | |
| 15 | FIG. 8 | P7/P8 (Note 2) | 60 | 380 | 30 | 31,33 | 6300 | -90 | 32,34 | 6300 | -90 | 34 | 90 | 150 | 200 | 60 | 78 | 2.5 | 104 | 6.7 | 15 | 30 | A4 | 7000 | -100 | -10 | |

24

Table 9 (Continuation of Table 8)

| Sample no. | Welding conditions and vTrs3 of arrester welded joint | | | | Welding conditions and vTrs4 of weld metal forming small steel plate welded joint | | | | Results of evaluation of brittle crack arrest toughness of welded structure | | | | |
|---|---|---|---|---|---|---|---|---|---|---|---|---|---|
| | Heat Input (kJ/cm) | Width of weld metal (mm) | DBTT vTrs3 (weld metal) (°C) | Sign judgment formula [2'] vTrs3-vTrs1-20 | Heat Input (kJ/cm) | Width of weld metal (mm) | DBTT vTrs4 (weld metal) (°C) | Sign judgment formula [4] vTrs1-20-vTrs4 | Load stress (N/mm²) | Sign judgment formula [0] vTrs1-vTrs3 | State of advance of brittle crack (see sign of FIG. 2) | Crack arrest performance | Evaluation of score based on crack arrest distance |
| 26 | 50 | 39 | -30 | 25 | 30 | 45 | -135 | 40 | 262 | -45 | (b) | Crack arrest | 3 |
| 27 | 50 | 38 | -30 | 40 | 35 | 42 | -110 | 0 | 262 | -60 | (b) | Crack arrest | 5 |
| 28 | 50 | 35 | -30 | 40 | 30 | 36 | -135 | 25 | 262 | -60 | (c) | Crack arrest | 7 |
| 29 | 42 | 35 | -40 | 0 | - | - | - | - | 262 | -20 | (b) | Crack arrest | 5 |
| 1 | 42 | 35 | -40 | 0 | - | - | - | - | 262 | -20 | (d3) | No crack arrest | F (Note 7) |
| 2 | 45 | 32 | -55 | 5 | - | - | - | - | 262 | -25 | (d1) | No crack arrest | F |
| 3 | 45 | 38 | -55 | 0 | - | - | - | - | 262 | -20 | (d2) | No crack arrest | F |
| 4 | 45 | 38 | -55 | 0 | - | - | - | - | 262 | -20 | (d2) | No crack arrest | F |
| 5 | 45 | 38 | -50 | 5 | - | - | - | - | 262 | -25 | (d1) | No crack arrest | F |
| 6 | 45 | 38 | -70 | -15 | - | - | - | - | 262 | -5 | (d1) | No crack arrest | F |
| 7 | 43.5 | 44 | -45 | 25 | - | - | - | - | 262 | -45 | (d1) | No crack arrest | F |
| 8 | 45 | 42 | -45 | 10 | - | - | - | - | 262 | -30 | (d1) | No crack arrest | F |
| 9 | 45 | 42 | -55 | 0 | - | - | - | - | 262 | -20 | (d2) | No crack arrest | F |
| 10 | 48 | 42 | -50 | 5 | - | - | - | - | 262 | -25 | (d1) | No crack arrest | F |
| 11 | 45 | 38 | -55 | 0 | - | - | - | - | 262 | -20 | (d1) | No crack arrest | F |
| 12 | 45.5 | 63 | -60 | 20 | - | - | - | - | 262 | -20 | (d1) | No crack arrest | F |
| 13 | 48 | 42 | -50 | 5 | - | - | - | - | 262 | -40 | (d1) | No crack arrest | F |
| 14 | 46 | 38 | -65 | -10 | 35 | 45 | -105 | 10 | 262 | -10 | (d3) | No crack arrest | F |
| 15 | 55 | 35 | -40 | 30 | 50 | 36 | -60 | 10 | 262 | -50 | (d2) | No crack arrest | F |

(Left-hand bracket label: Invention example)

Note 7: Symbol F means total fracture of joint test piece.

Note that in Tables 6 and 8, the contents of Notes 1 to 6 are the same as in Tables 2 and 4.

The Invention Examples 1 to 25 shown in Tables 6 and 7 are examples relating to the welded structure B of the second embodiment of the present invention explained above. The Invention Example 26 shown in Tables 8 and 9 are examples relating to the welded structure C of the third embodiment of the present invention, the Invention Examples 27 and 28 are examples relating to the welded structure D of the fourth embodiment, and the Invention Example 29 is an example relating to the welded structure A of the first embodiment.

Further, the Comparative Examples 1 and 2 shown in Tables 8 and 9 are comparative examples having similar structures with the welded structure A, Comparative Examples 3 to 14 are comparative examples having similar structures with the welded structure B, Comparative Examples 15 and 16 are comparative examples having similar structures with the welded structure C, and Comparative Example 17 is a comparative example having a similar structure with the welded structure D.

As shown in Tables 6 to 9, the welded structures according to the present invention (Invention Examples 1 to 29) all had states of propagation of brittle cracks of [b] or [c]. Due to this, it could be confirmed that in the welded structure of the present invention, even if a brittle crack occurs in the welded joint, the crack can be kept from propagating through the welded joint or base metal, fracture of the welded structure can be prevented, and the brittle crack arrest toughness is superior.

As opposed to this, the welded structures of Comparative Example 1 to 15 are examples in which in each case vTrs1≤vTrs3 and in which either the base metal properties of the steel plates, the properties or shape of the steel plate of the arrester member, or the properties of the weld metal of the small steel plate welded joint do not satisfy the provisions of the present invention, so advance of a brittle crack cannot be stopped.

The welded structures of Comparative Example 1 and Comparative Example 14 are examples where the value of the brittle crack arrest toughness (Kcal1) of the regions of 1A and 22 and 24 of the steel plate base metal is unsuitable and a crack entering such a region cannot be arrested.

The welded structure of Comparative Example 2 is an example where the crack enters the arrester member, but the Kca value of the arrester member is also unsuitable and the entering crack cannot be arrested.

The welded structure of Comparative Example 3 is an example where the angle θ1 of the arrester member is excessively small and therefore unsuitable. While a crack can be diverted along the outer edge of the brittle crack countering side, after that, it ends up propagating along the extension of the crack auxiliary countering side and leads to fracture.

The welded structure of Comparative Example 4 is an example where the angle θ2 of the arrester member is excessively small and therefore unsuitable. While the crack can be diverted along the outer edge of the brittle crack countering side, after that, it ends up propagating along the extension of the crack auxiliary countering side and leads to fracture.

The welded structure of Comparative Example 5 is an example where the angle θ2 of the arrester member is excessively large and therefore unsuitable. While the direction of advance cannot be controlled, the brittle crack which formed at the steel plate welded joint proceeds straight as is and then leads to fracture.

The welded structures of Comparative Examples 6 and 7 are examples where the height H of the arrester member is excessively small and therefore unsuitable, so the arrester member cannot arrest the crack.

The welded structure of Comparative Example 8 is an example where the angle θ1 of the arrester member is excessively large and therefore unsuitable. The direction of advance cannot be controlled to divert a crack to the steel plate base metal side. A brittle crack which occurs at the steel plate welded joint proceeds straight as is and leads to fracture.

The welded structure of Comparative Example 9 is an example where the horizontal width W of the arrester member excessively small and therefore unsuitable. While a crack can be diverted along the outer edge of the brittle crack countering side, it then ends up propagating along the extended part of the crack auxiliary countering side and leads to fracture.

The welded structures of Comparative Examples 10, 11, and 12 are examples where the crack enters the arrester member, but the plate thickness "t" of the arrester member is excessively small and therefore unsuitable, so the arrester member cannot arrest the crack.

The welded structure of Comparative Example 13 is an example where the plate thickness "t" of the arrester member is excessive and therefore unsuitable. The arrester member substantially loses the ability to divert a crack to the steel plate base metal side, so the direction of advance cannot be controlled and a brittle crack which occurs at the steel plate welded joint proceeds straight as it is and leads to fracture.

The welded structure of Comparative Example 15 has an insufficient vTrs of the weld metal of the small steel plate welded joint. While a brittle crack which occurs can be diverted along the outer edge of the brittle crack countering side, it then propagates along the weld metal of the small steel plate welded joint and leads to fracture.

From the above results, it is clear that with the welded structure of the present invention, even if a brittle crack occurs in the welded joint, it is possible to keep the crack from being propagated through the welded joint or the base metal and possible to prevent fracture of the welded structure. It is clear that this has excellent resistance to brittle crack propagation.

Explanation of References

A, B, C, D. welded structures

1, 10, 10A, 10B. steel plates

1A. region (at least location of steel plate where ends of arrester member and arrester welded joint in horizontal width direction face each other)

2, 20, 20A, 20B. steel plate welded joints

3, 3a, 3b. through holes

4. crack control part

5. arrester member

51, 52. slanted outer edge extending from main brittle crack countering side of arrester member

51a, 51b. back end of slanted outer edge of arrester member (end of arrester member in horizontal width direction)

53. outer edge of arrester member forming auxiliary countering side against brittle crack

6, 60. arrester welded joint

25, 26, 35, 36. small steel plate welded joints

21, 22, 23, 24, 31, 32, 33, 34. small steel plates

70. ship structure

L. weld line

θ1. slant angle of slanted outer edge of arrester member with respect to longitudinal direction of steel plate welded joint

θ2. angle of intersection of outer edge of auxiliary brittle crack countering side of arrester member with steel plate welded joint

**Claims**

1. A welded structure having excellent brittle crack propagation resistance wherein steel plates having at least partial regions with a brittle crack arrest property Kca of $4000N/mm^{1.5}$ or more are butt welded together so as to form a steel plate welded joint,

wherein

the steel plate comprises at least two steel plates which are aligned in a longitudinal direction of the steel plate welded joint, the longitudinal aligned steel plates being butt welded together so as to form a longitudinal aligned welded joint, and

at least one location of the steel plate welded joint is provided with a crack control part which controls propagation of a brittle crack which has occurred at the steel plate welded joint,

the crack control part has an arrester member which comprises a steel material having a brittle crack arrest property Kca of $6000N/mm^{1.5}$ or more and which is inserted in a through hole which is formed spanning from the steel plate welded joint to the steel plates and arrester welded joints which are formed by butting welding of outer edges of said arrester member and the facing steel plate base metal, the welded structure **characterized in that**

the arrester member is formed so that dimensions of a height H (mm) along a longitudinal direction of said steel plate welded joint, a width W (mm) in a direction intersecting the longitudinal direction of the steel plate welded joint, and a plate thickness "t" (mm) satisfy a relationship shown by the following formulas (1) to (3),

outer edges of the arrester member at a brittle crack main countering side extend from a weld metal zone of the steel plate welded joint to the two sides of the steel plate welded joint while slanted by an angle of 15° to 50° with respect to the longitudinal direction of the steel plate welded joint and another outer edge at a brittle crack auxiliary countering side intersects the steel plate welded joint by an angle of 70° to 110°,

the crack control part is provided so that at least a horizontal width direction end of the arrester member faces a region of the steel plate where the Kca is $4000N/mm^{1.5}$ or more,

the crack control part is provided so that the arrester member welded joint which is formed at the horizontal width direction end side of the arrester member is contiguous with the longitudinal aligned welded joint;

$$1.2T \leq H \quad \ldots \ldots \quad (1)$$

$$3.2d \leq W \ \ldots \ldots \ (2)$$

$$0.75T \leq t \leq 1.5T \ \ldots \ldots (3)$$

where, in the above formulas (1) to (3), "T" expresses a plate thickness of the steel plate (mm), while "d" expresses a width of a weld metal zone at the steel plate welded joint (mm).

2. A welded structure having excellent brittle crack propagation resistance wherein steel plates having at least partial regions with a brittle crack arrest property Kca of $4000N/mm^{1.5}$ or more are butt welded together so as to form a steel plate welded joint wherein,

the steel plate comprises at least two steel plates which are aligned in a longitudinal direction of the steel plate welded joint, the longitudinal aligned steel plates being butt welded together so as to form a longitudinal aligned welded joint, and

the crack control part is provided so that the arrester welded joints which are formed at the horizontal width direction end side of the arrester member include a part of the longitudinal aligned welded joint,

at least one location of the steel plate welded joint is provided with a crack control part which controls propagation of a brittle crack which has occurred at the steel plate welded joint,

the crack control part has an arrester member which comprises a steel material having a brittle crack arrest property Kca of $6000N/mm^{1.5}$ or more and which is inserted in a through hole which is formed spanning from the steel plate welded joint to the steel plates and arrester welded joints which are formed by butting welding of outer edges of said arrester member and the facing steel plate base metal,

the welded structure **characterized in that**

the arrester member is formed so that dimensions of a height H (mm) along a longitudinal direction of said steel plate welded joint, a width W (mm) in a direction intersecting the longitudinal direction of the steel plate welded joint, and a plate thickness "t" (mm) satisfy a relationship shown by the following formulas (1) to (3),

outer edges of the arrester member at a brittle crack main countering side extend from a weld metal zone of the steel plate welded joint to the two sides of the steel plate welded joint while slanted by an angle of 15° to 50° with respect to the longitudinal direction of the steel plate welded joint and another outer edge at a brittle crack auxiliary countering side intersects the steel plate welded joint by an angle of 70° to 110°,

the crack control part is provided so that at least a horizontal width direction end of the arrester member faces a region of the steel plate where the Kca is $4000N/mm^{1.5}$ or more, and

a relationship between a brittle-to-ductile fracture transition temperature vTrs4 (°C) which expresses a toughness of the weld metal zone at the steel plate welded joint and a brittle-to-ductile fracture transition temperature vTrs1 (°C) which expresses a base metal toughness of the steel plate satisfies a relationship expressed by the following formula

$$vTrs4 \leq vTrs1-20$$

$$1.2T \leq H \ \ldots \ldots \ (1)$$

$$3.2d \leq W \ \ldots \ldots \ (2)$$

$$0.75T \leq t \leq 1.5T \ \ldots \ldots (3)$$

where, in the above formulas (1) to (3), "T" expresses a plate thickness of the steel plate (mm), while "d" expresses a width of a weld metal zone at the steel plate welded joint (mm).

3. A welded structure having excellent brittle crack propagation resistance as set forth in claim 1, **characterized in that** a relationship between a brittle-to-ductile fracture transition temperature vTrs2 (°C) which expresses a toughness of the arrester member and a brittle-to-ductile fracture transition temperature vTrs1 (°C) which expresses a base metal toughness of the steel plate satisfies a relationship expressed by the following formula

$$vTrs2 \leq vTrs1-20.$$

4. A welded structure having excellent brittle crack propagation resistance as set forth in claim 1 or 2, **characterized in that** a relationship between a brittle-to-ductile fracture transition temperature vTrs3 (°C) which expresses a toughness of the weld metal zone in the arrester welded joints and a brittle-to-ductile fracture transition temperature vTrs1 (°C) which expresses a base metal toughness of the steel plate satisfies a relationship expressed by the following formula

$$vTrs3 \leq vTrs1-20.$$

5. A welded structure having excellent brittle crack propagation resistance as set forth in claim 1 or 2, **characterized in that** a relationship between a brittle-to-ductile fracture transition temperature vTrs3 (°C) which expresses a toughness of the weld metal zone in the arrester welded joints and a brittle-to-ductile fracture transition temperature vTrs1 (°C) which expresses a base metal toughness of the steel plate satisfies a relationship expressed by the following formula

$$vTrs1+20 \leq vTrs3 \leq 0$$

6. A welded structure having excellent brittle crack propagation resistance as set forth in any one of claims 1 to 4, **characterized in that** the steel plate has a plate thickness of 25 mm to 150 mm.

7. A welded structure having excellent brittle crack propagation resistance as set forth in any one of claims 1 to 6, **characterized in that** the steel plate has at least a partial region where a brittle crack arrest property Kca is 6000N/mm$^{1.5}$ or more and **in that** the crack control part is provided so that at least a horizontal width direction end of the arrester member faces a region of the steel plate where the Kca is 6000N/mm$^{1.5}$ or more.

**Patentansprüche**

1. Schweißkonstruktion mit ausgezeichnetem Widerstand gegen Sprödrissfortpflanzung, wobei Stahlbleche mit zumindest teilweisen Bereichen mit einem Sprödrissauffangvermögen Kca von mindestens 4000 N/mm$^{1,5}$ miteinander stumpfverschweißt sind, um eine Stahlblech-Schweißverbindung zu bilden, wobei das Stahlblech mindestens zwei Stahlbleche aufweist, die in Längsrichtung der Stahlblech-Schweißverbindung ausgerichtet sind, wobei die längs ausgerichteten Stahlbleche miteinander stumpfverschweißt sind, um eine längs ausgerichtete Schweißverbindung zu bilden, und
mindestens eine Stelle der Stahlblech-Schweißverbindung mit einem Risseindämmteil versehen ist, das die Fortpflanzung eines Sprödrisses eindämmt, der an der Stahlblech-Schweißverbindung aufgetreten ist,
das Risseindämmteil ein Auffangbauteil, das ein Stahlmaterial mit einem Sprödrissauffangvermögen Kca von mindestens 6000 N/mm$^{1,5}$ aufweist und das in ein Durchgangsloch eingefügt ist, das von der Stahlblech-Schweißverbindung zu den Stahlblechen überspannend gebildet ist, und Auffangschweißverbindungen hat, die durch Stumpfverschweißen von Außenkanten des Auffangbauteils und des zu ihnen weisenden Stahlblech-Grundmaterials gebildet sind, wobei die Schweißkonstruktion **dadurch gekennzeichnet ist, dass**
das Auffangbauteil so gebildet ist, dass Maße einer Höhe H (mm) in Längsrichtung der Stahlblech-Schweißverbindung, einer Breite W (mm) in einer die Längsrichtung der Stahlblech-Schweißverbindung schneidenden Richtung und einer Blechdicke "t" (mm) eine durch die nachstehenden Formeln (1) bis (3) dargestellte Beziehung erfüllen, sich Außenkanten des Auffangbauteils an einer Sprödriss-Hauptbekämpfungsseite von einer Schweißmetallzone der Stahlblech-Schweißverbindung zu den beiden Seiten der Stahlblech-Schweißverbindung erstrecken, während sie in einem Winkel von 15° bis 50° im Hinblick auf die Längsrichtung der Stahlblech-Schweißverbindung abgeschrägt sind, und eine weitere Außenkante an einer Sprödriss-Nebenbekämpfungsseite die Stahlblech-Schweißverbindung in einem Winkel von 70° bis 110° schneidet,

das Risseindämmteil so vorgesehen ist, dass zumindest ein waagerechtes Breitenrichtungsende des Auffangbauteils zu einem Bereich des Stahlblechs weist, in dem der Wert Kca mindestens 4000 N/mm$^{1,5}$ beträgt,

das Risseindämmteil so vorgesehen ist, dass die Auffangbauteil-Schweißverbindung, die an der waagerechten Breitenrichtungsendseite des Auffangbauteils gebildet ist, mit der längs ausgerichteten Schweißverbindung zusammenhängt;

$$1,2T \leq H \qquad (1),$$

$$3,2d \leq W \qquad (2),$$

$$0,75T \leq t \leq 1,5T \qquad (3),$$

wobei in den vorstehenden Formeln (1) bis (3) "T" eine Blechdicke des Stahlblechs (mm) ausdrückt, während "d" eine Breite einer Schweißmetallzone an der Stahlblech-Schweißverbindung (mm) ausdrückt.

**2.** Schweißkonstruktion mit ausgezeichnetem Widerstand gegen Sprödrissfortpflanzung, wobei Stahlbleche mit zumindest teilweisen Bereichen mit einem Sprödrissauffangvermögen Kca von mindestens 4000 N/mm$^{1,5}$ miteinander stumpfverschweißt sind, um eine Stahlblech- Schweißverbindung zu bilden, wobei das Stahlblech mindestens zwei Stahlbleche aufweist, die in Längsrichtung der Stahlblech- Schweißverbindung ausgerichtet sind, wobei die längs ausgerichteten Stahlbleche miteinander stumpfverschweißt sind, um eine längs ausgerichtete Schweißverbindung zu bilden, und

das Risseindämmteil so vorgesehen ist, dass die Auffangschweißverbindungen, die an der waagerechten Breitenrichtungsendseite des Auffangbauteils gebildet sind, ein Teil der längs ausgerichteten Schweißverbindung aufweisen,

mindestens eine Stelle der Stahlblech- Schweißverbindung mit einem Risseindämmteil versehen ist, das die Fortpflanzung eines Sprödrisses eindämmt, der an der Stahlblech- Schweißverbindung aufgetreten ist,

das Risseindämmteil ein Auffangbauteil, das ein Stahlmaterial mit einem Sprödrissauffangvermögen Kca von mindestens 6000 N/mm$^{1,5}$ aufweist und das in ein Durchgangsloch eingefügt ist, das von der Stahlblech- Schweißverbindung zu den Stahlblechen überspannend gebildet ist, und Auffangschweißverbindungen hat, die durch Stumpfverschweißen von Außenkanten des Auffangbauteils und des zu ihnen weisenden Stahlblech- Grundmetalls gebildet sind, wobei die Schweißkonstruktion **dadurch gekennzeichnet ist, dass**

das Auffangbauteil so gebildet ist, dass Maße einer Höhe H (mm) in Längsrichtung der Stahlblech- Schweißverbindung, einer Breite W (mm) in einer die Längsrichtung der Stahlblech- Schweißverbindung schneidenden Richtung und einer Blechdicke "t" (mm) eine durch die nachstehenden Formeln (1) bis (3) dargestellte Beziehung erfüllen, sich Außenkanten des Auffangbauteils an einer Sprödriss- Hauptbekämpfungsseite von einer Schweißmetallzone der Stahlblech- Schweißverbindung zu den beiden Seiten der Stahlblech- Schweißverbindung erstrecken, während sie in einem Winkel von 15° bis 50° im Hinblick auf die Längsrichtung der Stahlblech- Schweißverbindung abgeschrägt sind, und eine weitere Außenkante an einer Sprödriss- Nebenbekämpfungsseite die Stahlblech- Schweißverbindung in einem Winkel von 70° bis 110° schneidet,

das Risseindämmteil so vorgesehen ist, dass zumindest ein waagerechtes Breitenrichtungsende des Auffangbauteils zu einem Bereich des Stahlblechs weist, in dem der Wert Kca mindestens 4000 N/mm$^{1,5}$ beträgt, und

eine Beziehung zwischen einer Spröd- zu- Zähbruch- Übergangstemperatur vTrs4 (°C), die eine Zähigkeit der Schweißmetallzone an der Stahlblech- Schweißverbindung ausdrückt, und einer Spröd- zu- Zähbruch- Übergangstemperatur vTrs1 (°C), die eine Grundmetallzähigkeit des Stahlblechs ausdrückt, eine durch die nachstehende Formel ausgedrückte Beziehung erfüllt:

$$vTrs4 \leq vTrs1-20$$

$$1,2T \leq H \qquad (1),$$

$$3,2d \leq W \qquad (2),$$

$$0,75T \leq t \leq 1,5T \qquad (3),$$

wobei in den vorstehenden Formeln (1) bis (3) "T" eine Blechdicke des Stahlblechs (mm) ausdrückt, während "d" eine Breite einer Schweißmetallzone an der Stahlblech- Schweißverbindung (mm) ausdrückt.

**3.** Schweißkonstruktion mit ausgezeichnetem Widerstand gegen Sprödrissfortpflanzung nach Anspruch 1, **dadurch gekennzeichnet, dass** eine Beziehung zwischen einer Spröd- zu- Zähbruch- Übergangstemperatur vTrs2 (°C), die eine Zähigkeit des Auffangbauteils ausdrückt, und einer Spröd- zu- Zähbruch- Übergangstemperatur vTrs1 (°C), die eine Grundmetallzähigkeit des Stahlblechs ausdrückt, eine durch die nachstehende Formel ausgedrückte Beziehung erfüllt:

$$vTrs2 \leq vTrs1-20.$$

**4.** Schweißkonstruktion mit ausgezeichnetem Widerstand gegen Sprödrissfortpflanzung nach Anspruch 1 oder 2, **dadurch gekennzeichnet, dass** eine Beziehung zwischen einer Spröd- zu- Zähbruch- Übergangstemperatur vTrs3 (°C), die eine Zähigkeit der Schweißmetallzone in den Auffangschweißverbindungen ausdrückt, und einer Spröd- zu- Zähbruch- Übergangstemperatur vTrs1 (°C), die eine Grundmetallzähigkeit des Stahlblechs ausdrückt, eine durch die nachstehende Formel ausgedrückte Beziehung erfüllt:

$$vTrs3 \leq vTrs1-20.$$

**5.** Schweißkonstruktion mit ausgezeichnetem Widerstand gegen Sprödrissfortpflanzung nach Anspruch 1 oder 2, **dadurch gekennzeichnet, dass** eine Beziehung zwischen einer Spröd- zu- Zähbruch- Übergangstemperatur vTrs3 (°C), die eine Zähigkeit der Schweißmetallzone in den Auffangschweißverbindungen ausdrückt, und einer Spröd- zu- Zähbruch- Übergangstemperatur vTrs1 (°C), die eine Grundmetallzähigkeit des Stahlblechs ausdrückt, eine durch die nachstehende Formel ausgedrückte Beziehung erfüllt:

$$vTrs1+20 \leq vTrs3 \leq 0.$$

**6.** Schweißkonstruktion mit ausgezeichnetem Widerstand gegen Sprödrissfortpflanzung nach einem der Ansprüche 1 bis 4, **dadurch gekennzeichnet, dass** das Stahlblech eine Blechdicke von 25 mm bis 150 mm hat.

**7.** Schweißkonstruktion mit ausgezeichnetem Widerstand gegen Sprödrissfortpflanzung nach einem der Ansprüche 1 bis 6, **dadurch gekennzeichnet, dass** das Stahlblech zumindest einen teilweisen Bereich hat, in dem ein Sprödrissauffangvermögen Kca mindestens 6000 N/mm[1,5] beträgt, und dadurch, dass das Risseindämmteil so vorgesehen ist, dass zumindest ein waagerechtes Breitenrichtungsende des Auffangbauteils zu einem Bereich des Stahlblechs weist, in dem der Wert Kca mindestens 6000 N/mm[1,5] beträgt.

**Revendications**

**1.** Structure soudée dotée d'une excellente résistance à la propagation de fissure par fragilité, où des plaques d'acier présentant au moins en partie des zones ayant une caractéristique d'arrêt de rupture fragile Kca de 4000 N/mm[1,5] ou plus sont soudées bout-à-bout entre elles de manière à former un joint soudé de plaque d'acier, où la plaque d'acier comprend au moins deux plaques d'acier alignées dans une direction longitudinale du joint soudé de plaque d'acier, les plaques d'acier alignées longitudinalement étant soudées bout-à-bout entre elles de manière à former un joint soudé aligné longitudinalement, et où au moins un emplacement du joint soudé de plaque d'acier est pourvu d'une partie de limitation de fissure qui limite la propagation d'une fissure par fragilité survenue sur le joint soudé de plaque d'acier,

la partie de limitation de fissure présente un élément d'arrêt comportant un matériau acier ayant une caractéristique d'arrêt de rupture fragile Kca de 6000 N/mm[1,5] ou plus, et qui est inséré dans un trou traversant s'étendant du joint soudé de plaque d'acier aux plaques d'acier et des joints soudés d'arrêt formés par soudage bout-à-bout de bords extérieurs de l'élément d'arrêt et du métal de base de plaque d'acier opposée,

la structure soudée étant **caractérisée en ce que** l'élément d'arrêt est formé de telle manière que les dimensions de hauteur H (en mm) dans une direction longitudinale du joint soudé de plaque d'acier, de largeur W (en mm) dans une direction croisant la direction longitudinale du joint soudé de plaque d'acier, et d'épaisseur de plaque « t » (en mm) satisfassent à une relation représentée par les formules (1) à (3) suivantes,

des bords extérieurs de l'élément d'arrêt sur un côté d'opposition principal à la fissure par fragilité s'étendent d'une zone de métal d'apport du joint soudé de plaque d'acier vers les deux côtés dudit joint soudé de plaque d'acier en étant inclinés suivant un angle compris entre 15° et 50° par rapport à la direction longitudinale du joint soudé de plaque d'acier, et un autre bord extérieur sur un côté d'opposition secondaire à la fissure par fragilité croise le joint soudé de plaque d'acier suivant un angle compris entre 70° et 110°,

la partie de limitation de fissure est prévue de telle manière qu'au moins une extrémité dans le sens de la largeur horizontale de l'élément d'arrêt soit opposée à une zone de la plaque d'acier où la caractéristique Kca est égale ou supérieure à 4000 N/mm[1,5],

la partie de limitation de fissure est prévue de telle manière que le joint soudé d'élément d'arrêt formé côté extrémité dans le sens de la largeur horizontale de l'élément d'arrêt est contigu au joint soudé aligné longitudinalement ;

$$1,2 \; T \leq H \; \ldots\ldots \; (1)$$

$$3,2 \; d \leq W \; \ldots\ldots \; (2)$$

$$0,75 \; T \leq t \leq 1,5 \; T \; \ldots\ldots \; (3)$$

« T » représentant, dans les formules (1) à (3) ci-dessus, une épaisseur de plaque de la plaque d'acier (en mm), « d » une largeur d'une zone de métal d'apport sur le joint soudé de plaque d'acier (en mm).

2. Structure soudée dotée d'une excellente résistance à la propagation de fissure par fragilité, où des plaques d'acier présentant au moins en partie des zones ayant une caractéristique d'arrêt de rupture fragile Kca de 4000 N/mm[1,5] ou plus sont soudées bout-à-bout entre elles de manière à former un joint soudé de plaque d'acier, où la plaque d'acier comprend au moins deux plaques d'acier alignées dans une direction longitudinale du joint soudé de plaque d'acier, les plaques d'acier alignées longitudinalement étant soudées bout-à-bout entre elles de manière à former un joint soudé aligné longitudinalement, et où la partie de limitation de fissure est prévue de telle manière que les joints soudés d'élément d'arrêt formés côté extrémité dans le sens de la largeur horizontale de l'élément d'arrêt comprennent une partie du joint soudé aligné longitudinalement,

au moins un emplacement du joint soudé de plaque d'acier est pourvu d'une partie de limitation de fissure qui limite la propagation d'une fissure par fragilité survenue sur le joint soudé de plaque d'acier,

la partie de limitation de fissure présente un élément d'arrêt comportant un matériau acier ayant une caractéristique d'arrêt de rupture fragile Kca de 6000 N/mm[1,5] ou plus, et qui est inséré dans un trou traversant s'étendant du joint soudé de plaque d'acier aux plaques d'acier et des joints soudés d'élément d'arrêt formés par soudage bout-à-bout de bords extérieurs de l'élément d'arrêt et du métal de base de plaque d'acier opposée,

la structure soudée étant **caractérisée en ce que** l'élément d'arrêt est formé de telle manière que les dimensions de hauteur H (en mm) dans une direction longitudinale du joint soudé de plaque d'acier, de largeur W (en mm) dans une direction croisant la direction longitudinale du joint soudé de plaque d'acier, et d'épaisseur de plaque « t » (en mm) satisfassent à une relation représentée par les formules (1) à (3) suivantes,
des bords extérieurs de l'élément d'arrêt sur un côté d'opposition principal à la fissure par fragilité s'étendent d'une zone de métal d'apport du joint soudé de plaque d'acier vers les deux côtés dudit joint soudé de plaque d'acier en étant inclinés suivant un angle compris entre 15° et 50° par rapport à la direction longitudinale du joint soudé de plaque d'acier, et un autre bord extérieur sur un côté d'opposition secondaire à la fissure par fragilité croise le joint soudé de plaque d'acier suivant un angle compris entre 70° et 110°,
la partie de limitation de fissure est prévue de telle manière qu'au moins une extrémité dans le sens de la largeur horizontale de l'élément d'arrêt soit opposée à une zone de la plaque d'acier où la caractéristique Kca est égale ou supérieure à 4000 N/mm$^{1,5}$, et
une relation entre une température de transition fragile-ductile vTrs4 (en ° C) exprimant une ténacité de la zone de métal d'apport sur le joint soudé de plaque d'acier et une température de transition fragile-ductile vTrs1 (en ° C) exprimant une ténacité du métal de base de la plaque d'acier satisfait à une relation exprimée par la formule suivante :

$$vTrs4 \leq vTrs1-20$$

$$1,2\ T \leq H\ \ldots\ldots\ (1)$$

$$3,2\ d \leq W\ \ldots\ldots\ (2)$$

$$0,75\ T \leq t \leq 1,5\ T\ \ldots\ldots\ (3)$$

« T » représentant, dans les formules (1) à (3) ci-dessus, une épaisseur de plaque de la plaque d'acier (en mm), « d » une largeur d'une zone de métal d'apport sur le joint soudé de plaque d'acier (en mm).

3. Structure soudée dotée d'une excellente résistance à la propagation de fissure par fragilité selon la revendication 1, **caractérisée en ce qu'**une relation entre une température de transition fragile-ductile vTrs2 (en ° C) exprimant une ténacité de l'élément d'arrêt et une température de transition fragile-ductile vTrs1 (en ° C) exprimant une ténacité du métal de base de la plaque d'acier satisfait à une relation exprimée par la formule suivante :

$$vTrs2 \leq vTrs1-20.$$

4. Structure soudée dotée d'une excellente résistance à la propagation de fissure par fragilité selon la revendication 1 ou la revendication 2, **caractérisée en ce qu'**une relation entre une température de transition fragile-ductile vTrs3 (en ° C) exprimant une ténacité de la zone de métal d'apport dans les joints soudés d'élément d'arrêt et une température de transition fragile-ductile vTrs1 (en ° C) exprimant une ténacité du métal de base de la plaque d'acier satisfait à une relation exprimée par la formule suivante :

$$vTrs3 \leq vTrs1-20.$$

5. Structure soudée dotée d'une excellente résistance à la propagation de fissure par fragilité selon la revendication 1 ou la revendication 2, **caractérisée en ce qu'**une relation entre une température de transition fragile-ductile vTrs3 (en ° C) exprimant une ténacité de la zone de métal d'apport dans les joints soudés d'élément d'arrêt et une température de transition fragile-ductile vTrs1 (en ° C) exprimant une ténacité du métal de base de la plaque d'acier satisfait à une relation exprimée par la formule suivante :

$$vTrs1+20 \leq vTrs3 \leq 0.$$

**6.** Structure soudée dotée d'une excellente résistance à la propagation de fissure par fragilité selon l'une des revendications 1 à 4, **caractérisée en ce que** la plaque d'acier présente une épaisseur de plaque comprise entre 25 mm et 150 mm.

**7.** Structure soudée dotée d'une excellente résistance à la propagation de fissure par fragilité selon l'une des revendications 1 à 6, **caractérisée en ce que** la plaque d'acier présente au moins une zone partielle où une caractéristique d'arrêt de rupture fragile Kca est égale ou supérieure à 6000 N/mm$^{1,5}$, et **en ce que** la partie de limitation de fissure est prévue de telle manière qu'au moins une extrémité dans le sens de la largeur horizontale de l'élément d'arrêt soit opposée à une zone de la plaque d'acier où la caractéristique Kca est égale ou supérieure à 6000 N/mm$^{1,5}$.

# Fig.1

# Fig.2

# Fig.3

# Fig.4

(a)

(b)

# Fig.5

Fig.6

Fig.7

# Fig.8

# Fig.9

(a)

(b)

(c)

# Fig.10

(a)

(b)

(c)

**EP 2 390 047 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005319516 A
- JP 2005131708 A
- JP 2007098441 A
- JP 2007302993 A
- JP 008248382 A